Europäisches Patentamt

European Patent Office

Office européen des brevets

(11) Publication number: **0 470 574 A2**

# EUROPEAN PATENT APPLICATION

(21) Application number: **91113197.7**

(22) Date of filing: **05.08.91**

(30) Priority: **06.08.90 JP 206851/90**
**10.08.90 JP 210512/90**
**10.08.90 JP 210511/90**

(43) Date of publication of application:
**12.02.92 Bulletin 92/07**

(84) Designated Contracting States:
**DE FR GB**

(51) Int. Cl.⁵: **G06F 12/08**

(71) Applicant: **FUJITSU LIMITED**
**1015, Kamikodanaka Nakahara-ku**
**Kawasaki-shi Kanagawa 211(JP)**

(72) Inventor: **Kitahara, Takeshi**
**2753, Glorietta Circle**
**Santa Clara, CA 95051(US)**

(74) Representative: **Seeger, Wolfgang, Dipl.-Phys.**
**SEEGER & SEEGER Patentanwälte &**
**European Patent Attorneys**
**Georg-Hager-Strasse 40**
**W-8000 München 70(DE)**

(54) Multiprocessor system including cache memories and method of controlling cache memories to maintain coherence of data therebetween.

(57) A multiprocessor system includes at least one copy-back cache memory ($M_1$) connected via a system bus to a common memory (CM). The copy-back cache memory includes a specific flag (S) for indicating whether an identical data is shared with other cache memories, a first unit (P1) for intercepting a response of the common memory to an access when it detects the access from another cache memory to a region where the specific flag is OFF, a second unit (P2) for transferring to the other cache memory an entry corresponding to a region indicated by the access address from the other cache memory and turning ON the specific flag, and a third unit (P3) for sending out a write address to the system bus and turning OFF the specific flag where a write into a shared and modified entry is carried out, to thereby invalidate a corresponding entry in the other cache memory based on the write address. As a result, it is possible to reflect an updated data on another cache memory even if data is newly written into a corresponding entry in the self cache memory after the transfer of the entry to another cache memory, and thus contributes to an improvement in the performance of the entire system.

EP 0 470 574 A2

## BACKGROUND OF THE INVENTION

### 1. Field of the Invention

The present invention relates to a multiprocessor system in which a plurality of cache memories and at least one common memory are connected via a system bus. More particularly, it relates to a technique of controlling a buffer invalidation processing for invalidating corresponding regions in other cache memories when respective write requests are generated simultaneously for the corresponding regions in the respective cache memories, to thereby maintain a coherency of data between the cache memories.

### 2. Description of the Related Art

In the above multiprocessor system, various approaches to control cache memories to maintain a coherency of data therebetween have been developed.

For example, in a known cache memory control in a system including copy-back cache memories and write-through cache memories in mixture, data rewritten in the copy-back cache memory is registered only in the write-through cache memory, and thereafter, the data concerned is lost from the copy-back cache memory.

To cope with the disadvantage, there can be adopted a method of writing the data concerned also into a common memory while an entry corresponding to the object region by the address access is transferred to the write-through cache memory. This method, however, has a drawback in that it is impossible to utilize an advantage of a copy-back cache memory (decrease in the frequencies of bus access) to the maximum extent. This leads to a lowering in the performance of the entire system and thus is not preferable.

In another known cache memory control, data newly written into the copy-back cache memory is not reflected in the write-through cache memory. Accordingly, a disadvantage arises in that a CPU corresponding to the write-through cache memory adopts the previous or old data as the object of the operation, and thus, the performance of the entire system is lowered.

Also, in a cache memory control in which respective write requests are simultaneously generated in a plurality of cache memories, another problem is posed. For example, where the timings of the write requests completely coincide with each other, buffer invalidation request commands are sent out to the system bus from the respective cache memories and thus the respective write data are lost or disappear. As a result, it is impossible to maintain the coherency of data between each cache memory.

Note, the problems in the prior art will be explained in detail later in contrast with the preferred embodiments of the present invention.

## SUMMARY OF THE INVENTION

An object of the present invention is to provide a cache memory control system which makes it possible to reflect an updated data on another cache memory even if data is newly written into a corresponding entry in the self cache memory after the transfer of the entry to another cache memory, and thus contributes to an improvement in the performance of the entire system.

Another object of the present invention is to provide a buffer invalidation control system which makes it possible to invalidate corresponding regions in other cache memories without losing data rewritten in a certain cache memory and utilize the merit of a copy-back cache memory (high speed operation) to the maximum extent, to thereby contribute to an improvement in the performance of the entire system.

According to one aspect of the present invention, there is provided a multiprocessor system in which a plurality of cache memories and at least one common memory are connected via a system bus, at least one of the plurality of cache memories being a copy-back cache memory, the copy-back cache memory including: a memory unit including a data region, an address region, a validation indication flag for indicating whether a region indicated by an access address exists in the self cache memory, a modified status indication flag for indicating whether data is rewritten, and a shared status indication flag for indicating whether an identical data is shared with other cache memories; a first unit, operatively connected to the memory unit, for intercepting a response of the common memory to an access when it detects the access from another cache memory to a region which is owned by the self cache memory and has already been rewritten and has not yet been reflected on the common memory; a second unit, operatively connected to the memory unit and the first unit, for transferring to the other cache memory an entry corresponding to a region indicated by the access address from the other cache memory and turning ON the shared status indication flag; and a third unit, operatively connected to the memory unit and the second unit, for sending out a write address to the system bus and turning OFF the shared status indication flag where a write into a shared and modified entry is carried out, to thereby invalidate a corresponding entry in the other cache memory based on the write address.

According to another aspect of the present invention, there is provided a multiprocessor system in which a plurality of copy-back cache memories and at least one common memory are connected via a system bus, each cache memory including: a memory unit including a data region, an address region, a validation indication flag for indicating whether a region indicated by an access address exists in the self cache memory, and a modified status indication flag for indicating whether data is rewritten; a register unit for storing an address and data based on a write request from a corresponding CPU; a unit, operatively connected to the memory unit and the register unit, for storing a write data by the write request from the corresponding CPU in an object entry and the register unit to turn ON the modified status indication flag and sending out to the system bus a buffer invalidation request command including a part of the write address when the object region is registered in the self cache memory and the modified status indication flag is OFF in the case of an occurrence of the write request from the corresponding CPU; a unit, operatively connected to the memory unit, for monitoring a command on the system bus and comparing an address included in the command with the write address; and a unit, operatively connected to the memory unit, the register unit and the comparing unit, for canceling a send-out wait status of the buffer invalidation request command and storing a content of the register unit in the common memory in a write-through manner when the command on the system bus indicates a buffer invalidation request command from another cache memory and an address included therein indicates an identical region in the send-out wait status of the buffer invalidation request command.

According to still another aspect of the present invention, there is provided a multiprocessor system in which a plurality of copy-back cache memories and at least one common memory are connected via a system bus, each cache memory including: a memory unit including a data region, an address region, a validation indication flag for indicating whether a region indicated by an access address exists in the self cache memory, and a modified status indication flag for indicating whether data is rewritten; a unit, operatively connected to the memory unit, for sending out to the system bus a buffer invalidation request command including a part of a write address from a corresponding CPU when the object region is registered in the self cache memory and the modified status indication flag is OFF in the case of an occurrence of the write request from the corresponding CPU; a unit, operatively connected to the memory unit and the sending unit, for monitoring a command on the system bus and, where the command is a buffer invalidation request command from another cache memory, canceling an address region included in the command out of the self cache memory; a register unit for retaining an address of the buffer invalidation request command sent out by the self cache memory; and a unit, operatively connected to the memory unit and the register unit, for comparing an address included in the buffer invalidation request command from another cache memory with a content of the register unit, to thereby make a control so as to ignore the buffer invalidation request command from the other cache memory to an identical region where it is detected within a predetermined period after the buffer invalidation request command has been sent out from the self cache memory.

BRIEF DESCRIPTION OF THE DRAWINGS.

Other objects and features of the present invention will be described hereinafter in detail by way of preferred embodiments with reference to the accompanying drawings, in which:

Figs. 1a to 1e are views illustrating a manner of a conventional cache memory control, in the form of time sequence;

Figs. 2a to 2d are views illustrating another manner of a conventional cache memory control, in the form of time sequence;

Figs. 3a and 3b are status transition diagrams of the copy-back cache memory (A) shown in Figs. 1a to 1e and Figs. 2a to 2d, respectively;

Figs. 4a and 4b are views for explaining the principle of the cache memory control according to the present invention;

Fig. 5 is a block diagram illustrating a constitution of a closely coupled multiprocessor system to which the cache memory control according to this invention is applied;

Fig. 6 is a circuit diagram illustrating an internal constitution of the copy-back cache memory (1A) shown in Fig. 5;

Figs. 7a to 7e are views illustrating a manner of the cache memory control in the system of Fig. 5, in the form of time sequence;

Figs. 8a to 8e are views illustrating another manner of the cache memory control in the system of Fig. 5, in the form of time sequence;

Fig. 9 is a status transition diagram of the copy-back cache memory (1A) shown in Fig. 5;

Fig. 10 is a view for explaining problems of a conventional cache memory control;

Fig. 11 is a status transition diagram of the cache memory shown in Fig. 10;

Figs. 12a and 12b are views for explaining the principle of the buffer invalidation control according to one aspect of the present invention;

Fig. 13 is a block diagram illustrating a constitution of a tightly coupled multiprocessor system to which the buffer invalidation control according to this invention is applied;

Figs. 14a and 14b are circuit diagrams illustrating an internal constitution of the cache memory (1A, 1B') shown in Fig. 13;

Figs. 15a and 15b are views illustrating a manner of the cache memory control in the system of Fig. 13, in the form of time sequence;

Fig. 16 is a status transition diagram of the cache memory (1A, 1B') shown in Fig. 13;

Figs. 17a to 17c are views for explaining problems of a conventional cache memory control;

Fig. 18 is a timing chart representing the operation of the cash memories shown in Figs. 17a to 17c;

Fig. 19 is a view for explaining the principle of the buffer invalidation control according to another aspect of the present invention;

Fig. 20 is a circuit diagram illustrating another internal constitution of the cache memory (1A, 1B') shown in Fig. 13;

Figs. 21a to 21c are views illustrating another manner of the cache memory control in the system of Fig. 13, in the form of time sequence; and

Fig. 22 is another status transition diagram of the cache memory (1A, 1B') shown in Fig. 13.

## DESCRIPTION OF THE PREFERRED EMBODIMENTS

(First Embodiment)

For a better understanding of the first preferred embodiment of the present invention, the problems in the prior art will be explained with reference to Figs. 1a to 3b.

Figures 1a to 1e illustrate a manner of a conventional cache memory control, in the form of time sequence. In the illustration, it is assumed that a cache memory "A" is a copy-back one and a cache memory "B" is a write-through one.

Note, reference "V" denotes a validation indication flag which indicates whether a region designated by an access address exists ($V = 1$) inside the self cache memory (the cache memory "A" in this case) or not ($V = 0$), and reference "M" denotes a modified status indication flag which indicates whether data is rewritten ($M = 1$) or not ($M = 0$).

(See Fig. 1a)

① The cache memory "B" requests a common memory "C" to read out data.

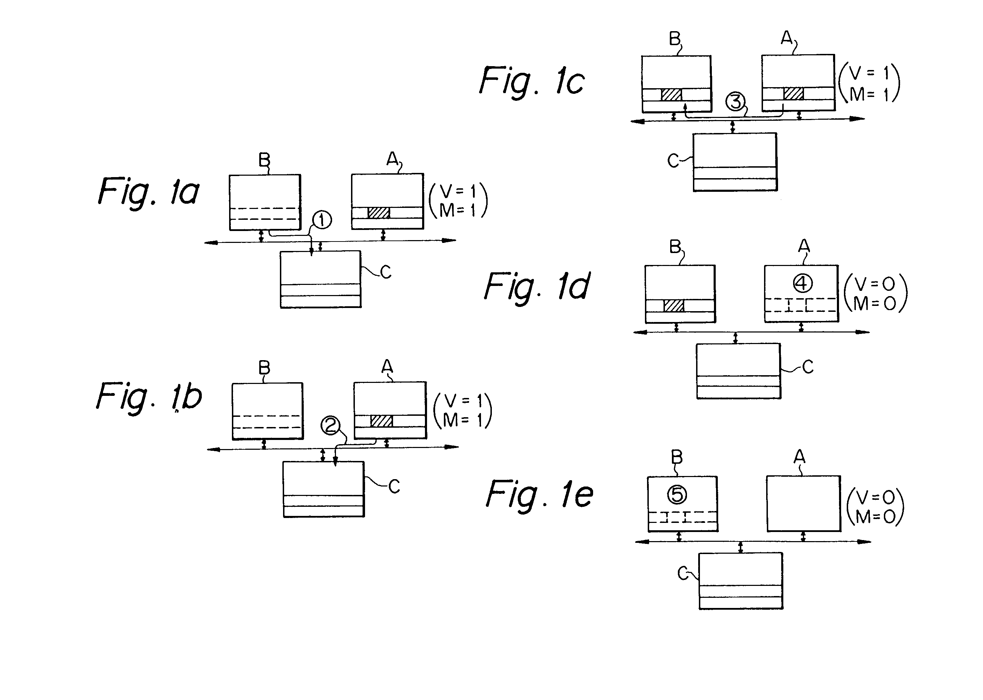

(See Fig. 1b)

② The cache memory "A" retains the object region of access by the cache memory "B", and detects that the object region has already been rewritten but not yet been reflected in the common memory "C", thereby intercepting a response of the common memory "C" to the cache memory "B" [Intercept].

(See Fig. 1c)

③ The cache memory "A" transfers to the cache memory "B" an entry corresponding to the object region of the access [Cache-to-cache transfer].

(See Fig. 1d)

④ The cache memory "A" clears the entry and sets the statuses of $V = 0$ and $M = 0$.

(See Fig. 1e)

⑤ The entry concerned in the cache memory "B" is invalidated by a replacement [write-through].

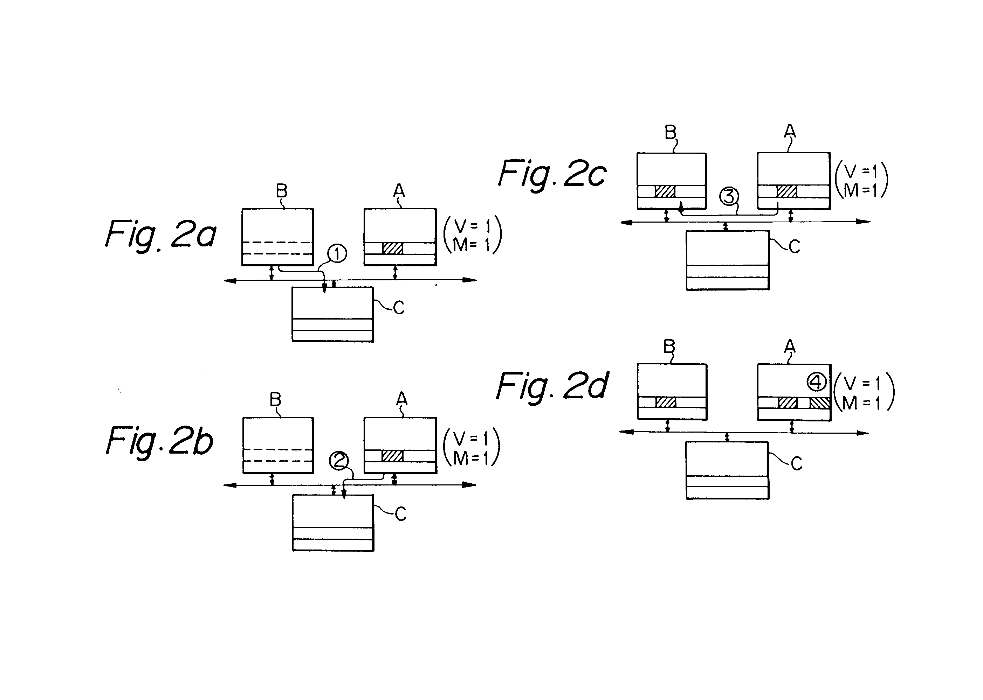

Figures 2a to 2d illustrate another manner of a conventional cache memory control, in the form of time sequence. Note, the references used are similar to those used in Fig. 1a to 1e.

The operations ①, ② and ③ (see Figs. 2a to 2c) are the same as those in Figs. 1a to 1c and thus the explanation thereof is omitted.

(See Fig. 2d)

④ The cache memory "A" (after transferring the entry concerned to the cache memory "B") makes a new write into the entry concerned based on a write instruction from a corresponding CPU (not shown).

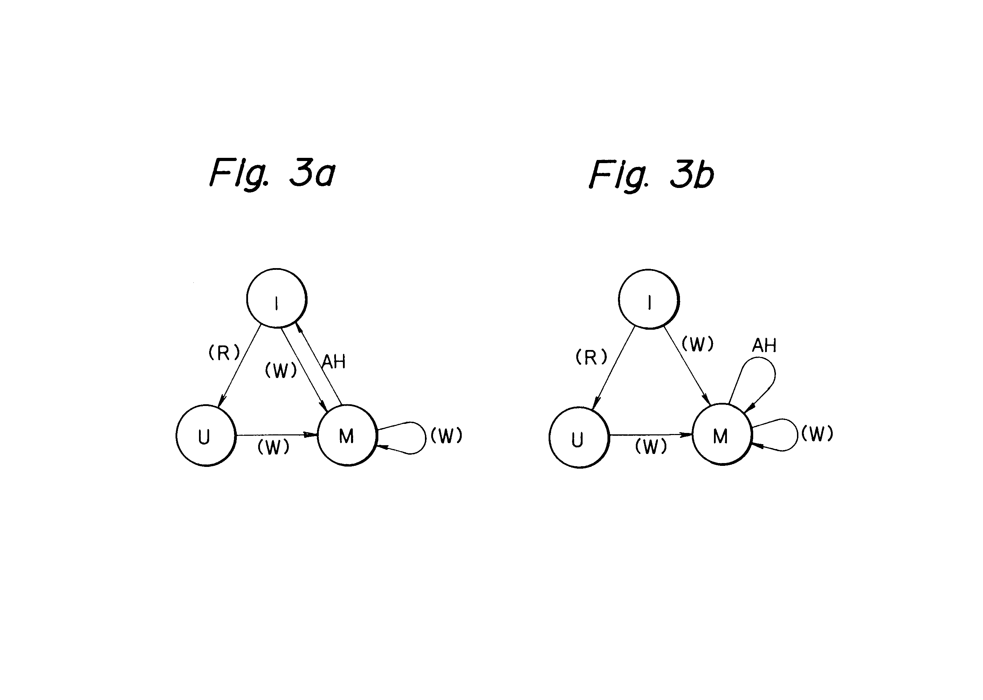

Furthermore, Figs.3 (a) and (b) show the status transition situation of cache memory "A" respectively in Fig. 1 and Fig. 2.

Figures 3a and 3b show manners of a status transition of the cache memory "A" shown in Figs. 1a to 1e and Figs. 2a to 2d, respectively.

In the illustration, reference "I" stands for an invalid status ($V = 0$); reference "U" a valid and unmodified status ($V = 1$ and $M = 0$); reference "M" a valid and modified status ($V = 1$ and $M = 1$); reference "(R)" a read operation; reference "(W)" a write operation; and reference "AH" an address coincidence status. In the address coincidence status, the intercept and the cache-to-cache transfer are carried out.

In the above control, the data rewritten in the cache memory "A" is registered only in the write-through cache memory "B" (see Fig. 1c), and thereafter, the data concerned is lost (see Figs. 1d and 1e).

To cope with this situation, the method of writing the data concerned also into the common memory "C" during the operation of Fig. 1c can be adopted. In this method, however, the merit (decrease in the frequencies of bus access) which is owned by a copy-back cache memory cannot be utilized to the maximum extent in the case that all of cache memories connected to the system bus are copy-back ones. As a result, a problem occurs in that the performance of the entire system is lowered.

On the other hand, in the control method shown in Figs. 2a to 2d, the data newly written into the cache memory "A" by the processing of Fig. 2d is not reflected in the write-through cache memory "B". As a result, a disadvantage arises in that the CPU corresponding to the cache memory "B" adopts the previous or old data as the object of the operation. This leads to a lowering in the performance of the system and thus is not preferable.

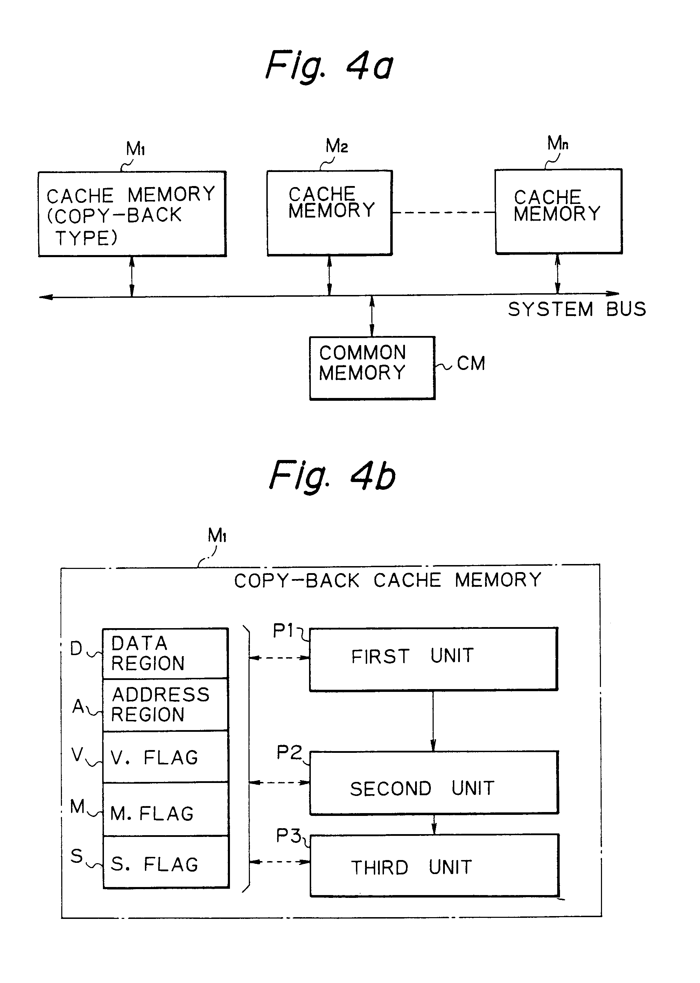

Figures 4a and 4b show the principle of the cache memory control according to the present invention.

As shown in Figs. 4a and 4b, the present cache memory control is applied to a multiprocessor system in which a plurality of cache memories M1 to Mn and at least one common memory CM are connected via a system bus. At least one ($M_1$) of the plurality of cache memories is a copy-back one. The copy-back cache memory $M_1$ includes: a memory unit including a data region D, an address region A, a validation indication flag V for indicating whether a region indicated by an access address exists in the self cache memory, a modified status indication flag M for indicating whether data is rewritten, and a shared status indication flag S for indicating whether an identical data is shared with other cache memories; a first unit P1, operatively connected to the memory unit, for intercepting a response of the common memory to an access when it detects the access from another cache memory to a region which is owned by the self cache memory and has already been rewritten and has not yet been reflected on the common memory; a second unit P2, operatively connected to the memory unit and the first unit, for transferring to the other cache memory an entry corresponding to a region indicated by the access address from the other cache memory and turning ON the shared status indication flag; and a third unit P3, operatively connected to the memory unit and the second unit, for sending out a write address to the system bus and turning OFF the shared status indication flag where a write into a shared and modified entry is carried out, to thereby invalidate a corresponding entry in the other cache memory based on the write address.

Where an access from another cache memory is taken to a region which the self memory (cache memory $M_1$) owns and which has already been rewritten but not yet been reflected in the common memory CM, the copy-back cash memory $M_1$ intercepts the response of the common memory to the access and transfers the entry concerned to the other cache memory. As a result, both the cache memory $M_1$ and the other cache memory share an identical data and thus the shared status indication flag "S" is turned ON.

In this state, where data is written into the entry concerned, the cache memory $M_1$ sends out the write address to the system bus. Thus, the other cache memory can detect that a new data has been written into the entry concerned which has been transferred immediately before it, and can clear (invalidate) the entry concerned. On the other hand, since the updated data (the data after the write) in the entry concerned does not coincide with the data which has been transferred before the write, the cache memory $M_1$ turns OFF the shared status indication flag "S".

Thus, even if data is newly written into the entry concerned in response to the access request from another cache memory after the transfer of the entry concerned, the other cache memory can invalidate the entry concerned. Accordingly, it is possible to remove a disadvantage that an old data is adopted as the object of the operation. In this case, it is possible to reflect the updated data in the cache memory $M_1$ on the other cache memory by effecting an access when necessary. This contributes to an improvement in the performance of the entire system.

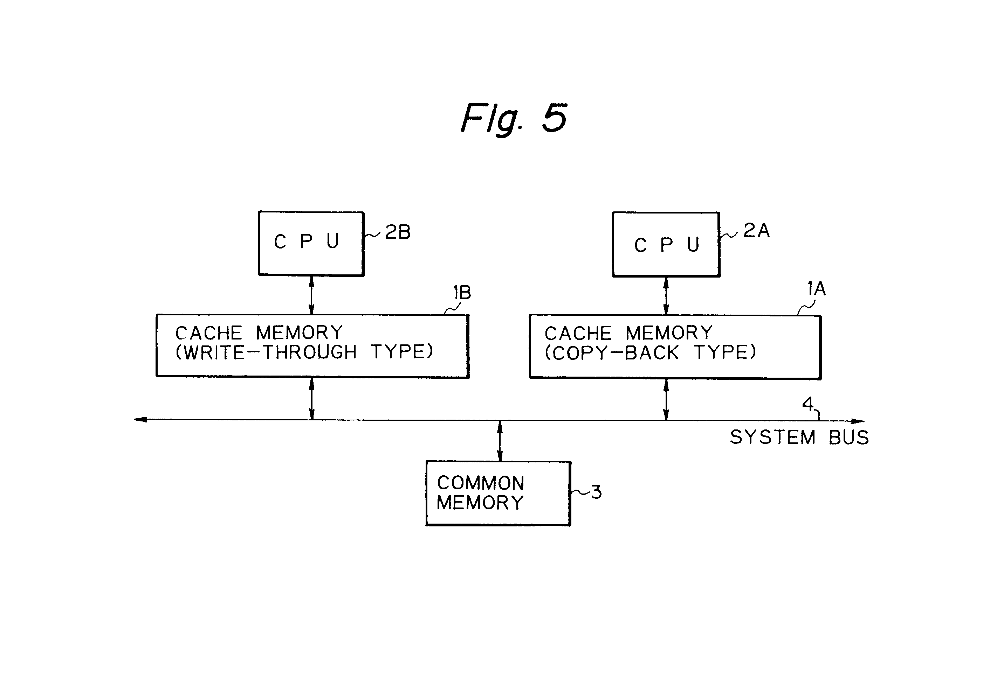

Figure 5 illustrates a constitution of a closely coupled multiprocessor system to which the cache memory control according to this invention is applied.

In this system, a plurality of cache memories which include copy-back cache memories 1A and write-through cache memories 1B in mixture (in the present embodiment, only one copy-back cache memory and one write-through cache memory are shown for simplification of the illustration) are connected via a system bus 4 to at least one common memory 3 (only one is shown for simplification of the illustration). Also, central processing units (CPUs) 2A and 2B each for controlling the supply of address information to the corresponding cache memory and the read/write of data are connected to the respective cache memories 1A and 1B, respectively.

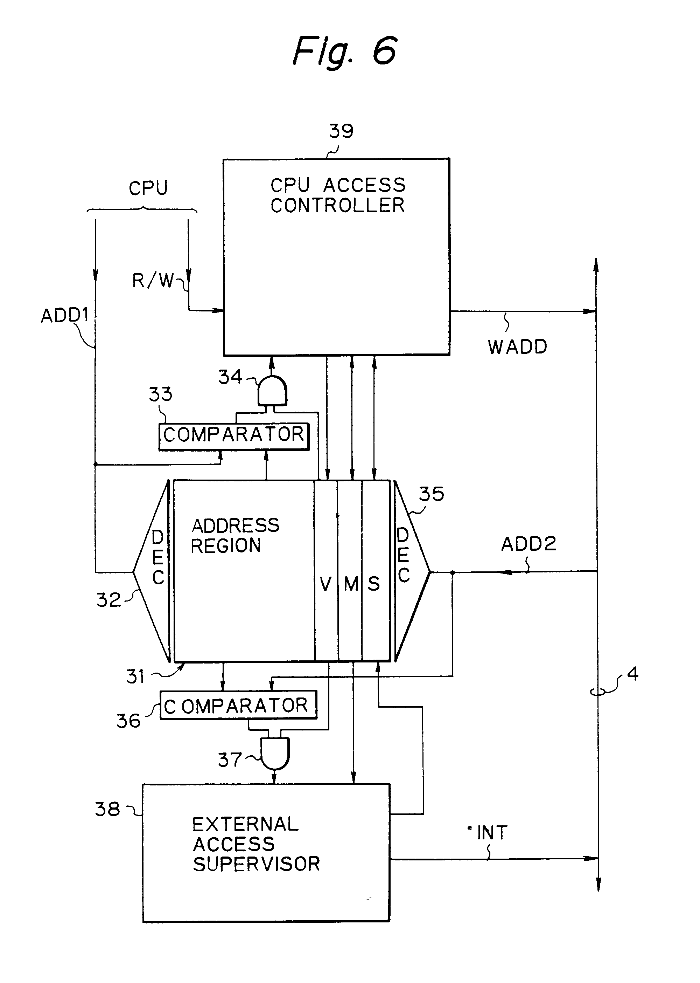

Figure 6 illustrates an internal constitution of the copy-back cache memory 1A.

In the illustration, reference 31 is a tag area (tag memory) which has an address area to memorize the physical address of access data, and three status flags, namely a valid indication flag (V) to indicate whether a region indicated by an access address exists in the self cache memory or not, a modified status indication flag (M) to indicate whether data is rewritten or not, and a shared status indication flag (S) to indicate whether an identical data is shared with the other cache memories or not. Note, the respective flags "V", "M" and "S" indicate "ON" or "1" when the respective conditions have been affirmed, and indicate "OFF" or "0" when the conditions have been denied.

Reference 32 denotes a decoder (DEC) for decoding an address ADD1 from the corresponding CPU; reference 33 a comparator for detecting a coincidence or incoincidence between the address which has been registered in the tag area 31 and the address ADD1 from the CPU; reference 34 an AND gate for responding to the output and valid indication flag "V" of the comparator; reference 35 a decoder (DEC) for decoding an address ADD2 on the system bus 4; reference 36 a comparator for detecting a coincidence or incoincidence between the address which has been registered in the tag area 31 and the address ADD2 on the system bus 4; and reference 37 an AND gate for responding to the output and valid indication flag V of the comparator 36.

Note, when the address of tag area 31 coincides with the CPU access address ADD1 (the outside access address ADD2), the comparator 33 (36) makes its output to be "1" and thereby makes the corresponding AND gate 34 (37) "valid".

Reference 38 denotes an external access supervisor, which responds to the output of AND gate 37 and the modified status indication flag "M" of AND gate 37, and has the functions of not simply sending out to the system bus 4 the intercept signal "INT" (the response intercept signal to the common memory 3) but also activating the transfer of data between cache memories to further turn ON the shared status indication flag "S". On the other hand, reference 39 denotes a CPU access controller, which has the functions of not only responding to the output of AND gate 34 and read/write control signals R/W from CPU as well as the modified status indication flag "M" and the shared status indication flag "S" to perform the usual processings, namely the hit/miss processing of cache and the bit renewal processing of flags "V" and "M" but also sending out the write address "WADD" to the system bus 4 and moreover turning OFF the shared status indication flag "S".

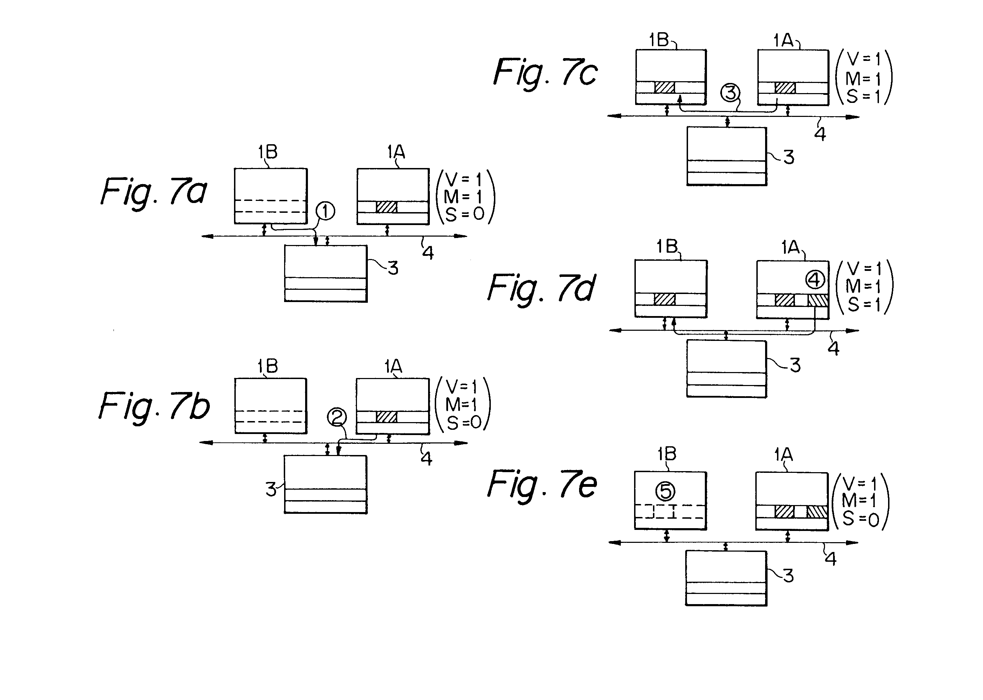

Next, the manner of the cache memory control is explained with reference to Figs. 7a to 7e.

(See Fig. 7a)

① The cache memory 1B requests the common memory 3 to read out data.

(See Fig. 7b)

② The cache memory 1A retains the object region of acccess by the cache memory 1B, detects that the region concerned has already been rewritten but not yet been reflected on the common memory 3, and intercepts a response of the common memory 3 to the cache memory 1B [Intercept].

(See Fig. 7c)

③ The cache memory 1A transfers to the cache memory 1B an entry corresponding to the region which is the object of the access [Cache-to-cache transfer]. At the same time, the shared status indication flag "S" is turned ON (S = 1).

(See Fig. 7d)

④ The cache memory 1A makes a new write into the entry concerned based on the write instruction from the corresponding CPU 2A.

At this time, the cache memory 1A sends out the write address to the system bus 4 because the shared status indication flag "S" is ON. The write address is sent out by the write-through manner or in the form of buffer invalidation request command.

(See Fig. 7e)

⑤ The cache memory 1B detects that the write address has been sent out to the system bus 4, and clears (invalidates) the entry concerned based on the write instruction from the corresponding CPU 2B.

At this time, the cache memory 1A turns OFF the shared status indication flag "S" (S = 0).

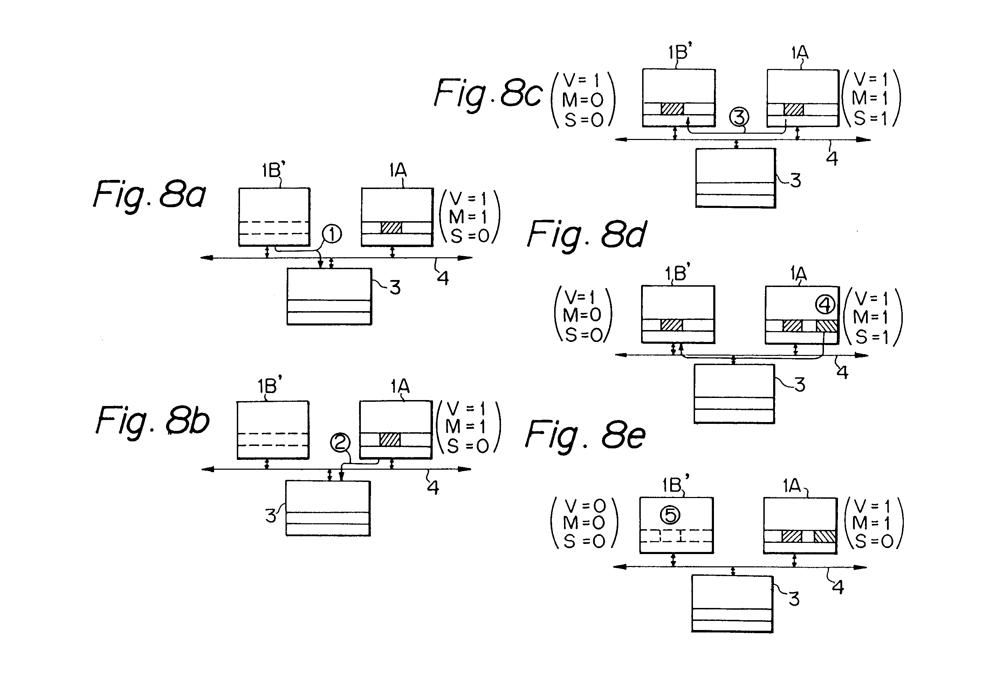

Additionally, even if the cache memory having an access to the common memory 3 is a copy-back one, the above cache memory control can be applied thereto in the same manner. An example thereof is shown in Figs. 8a to 8e. In the illustration, reference 1B' denotes a copy-back cache memory.

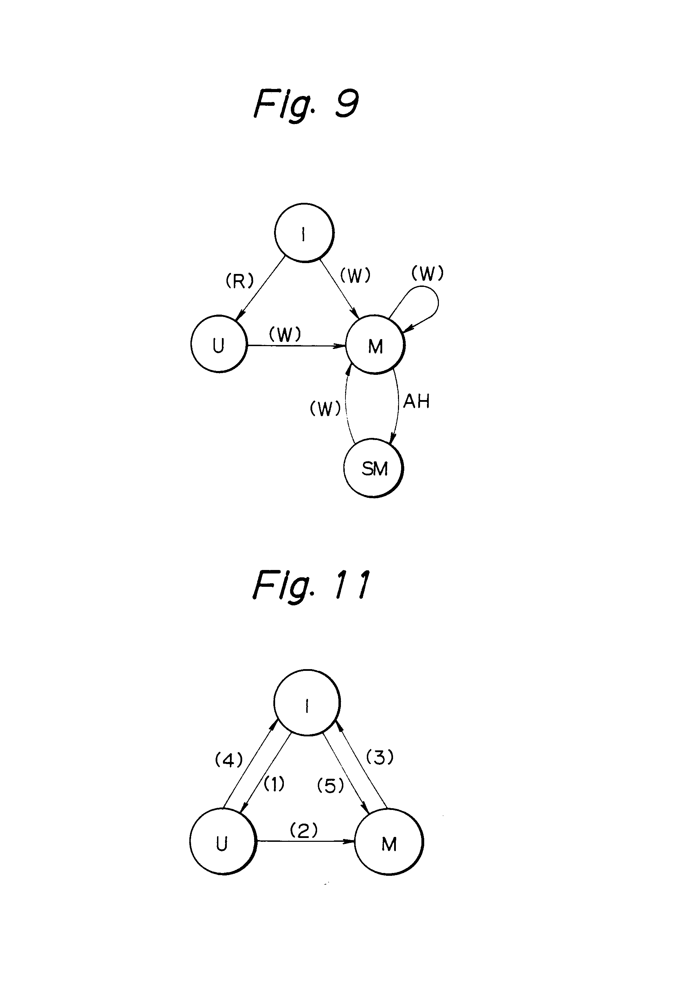

Figure 9 shows the manner of a status transition of the copy-back cache memory 1A shown in Fig. 5.

This embodiment can newly take a "valid, shared and modified status" SM (V = 1, M = 1 and S = 1) in addition to the three statuses, namely "I", "U" and "M" which have been taken in the conventional type (see Figs. 3a and 3b). In this case, the intercept and the cache-to-cache transfer are carried out during the transition to the status "SM" from the status "M", and the write address is sent out during the transition to the status "M" from the status "SM".

Thus, according to the cache memory control of this embodiment, even if data is newly written into the entry concerned in response to the access request from the cache memory 1B after the transfer of the entry by the cache memory 1A, the cache memory 1B can invalidate the entry concerned. Accordingly, it is possible to remove a disadvantage that an old data is adopted as the object of the operation. In this case, it is possible to reflect the updated data in the cache memory 1A on the cache memory 1B by effecting an access when necessary.

(Second Embodiment)

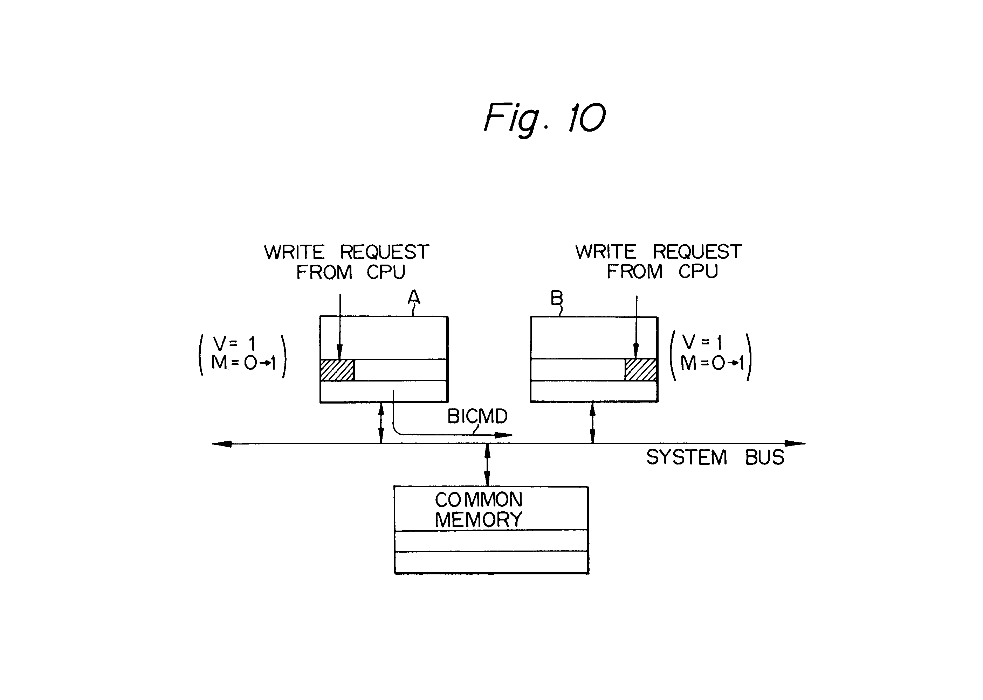

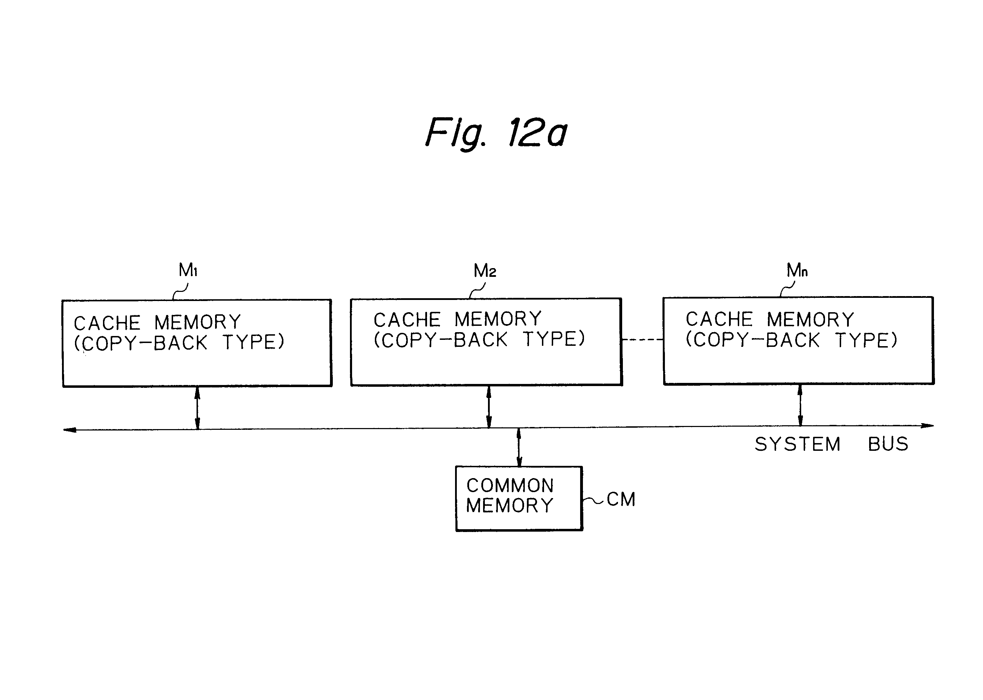

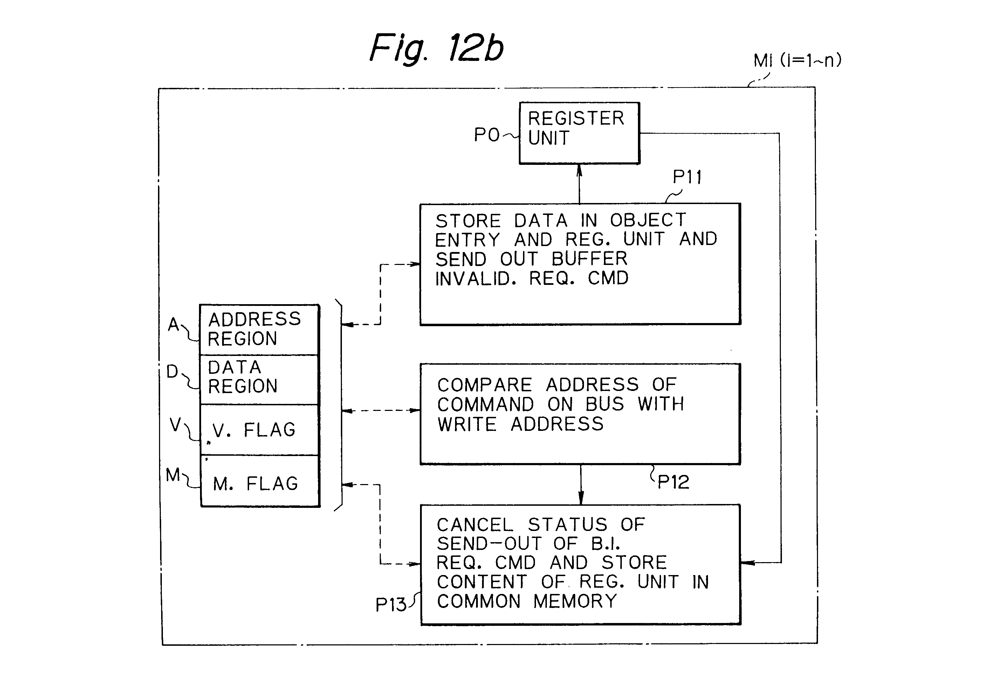

For a better understanding of the second preferred embodiment of the present invention, the problems in the prior art will be explained with reference to Figs. 10 and 11.

Figure 10 shows an example of a conventional cache memory control.

In the illustration, it is assumed that both the cache memories "A" and "B" are copy-back ones. Note, reference "V" denotes a validation indication flag which indicates whether a region designated by an access address exists in the self cache memory or not, and reference "M" denotes a modified status indication flag which indicates whether data is rewritten or not.

Where a data write request is given to the cache memories "A" and "B", respectively, from the corresponding CPUs, each cache memory "A", "B" writes the write data in an object region (entry) and turns ON the respective modified status indication flag "M" (M = 1) when the object region has been registered in the self memory (V = 1) and the modified status indication flag "M" has been OFF (M = 0). When the data is written in an unmodified status region, the cache memory "A" (or "B") sends out a buffer invalidation request command "BICMD" to the system bus (write-once operation) and thereby clears (invalidates) a corresponding region in the cash memory "B" (or "A").

In the conventional system, once the write-once operation is started, neither the cache memories "A" nor "B" returns an answer indicating the write end to the corresponding CPU until the issuance of the buffer invalidation request command is completed.

Also, where an external access address coincides with an address of an internal modified entry, the cache memory concerned sends out an intercept signal to the cache memory which has effected the external access, to thereby request a temporary interruption of the external access, and swaps out (copies back) data of one entry.

Furthermore, in the case that the intercept signal from the external device is received during the execution of the write-once operation, the cache memory concerned executes the write-once (send-out of the buffer invalidation request command) again after the access by the device (other cash memory) which has output the intercept signal is completed.

Additionally, Fig. 11 shows the manner of a status transition of the cache memory shown in Fig. 10.

In the illustration, reference "I" denotes an invalid status (V = 0); reference "U" a valid and unmodified status (V = 1 and M = 0); reference "M" a valid and modified status (V = 1 and M = 1); reference (1) a new registration by the read operation; reference (2) a write into an unmodified region and an issuance of the buffer invalidation request command; reference (3) a copy-back for replacement; reference (4) a clear for replacement; and reference (5) a new registration by the write operation. Note, the transition (4) to the status "I" from the status "U" and the transition (3) to the status "I" from the status "M" are executed by the clear operation based on the buffer invalidation request command from the other cache memory.

In the above conventional control system, where no response is returned to the CPU until the write-once operation ends without any interruption, a drawback occurs in that it is impossible to utilize the merit owned by a copy-back cache memory (decrease in the frequencies of bus access and the high speed processing caused thereby) to the maximum extent and thus the performance of the entire system is lowered.

Also, in the method of swapping out data of one entry, a drawback occurs in that a relatively long time is required for the communication between the cache memory concerned and the common memory.

Also, in the method of executing the write-once again, the write-once and the intercept operation are repeatedly carried out in the case that both the cache memories require the respective write-once, and a possibility occurs in that the write-once and the intercept operation fall down sometime into a limitless loop. For that reason, a problem occurs in that the high speed processing cannot be realized.

Furthermore, when a data write is simultaneously generated in a plurality of cache memories (in the example of Fig. 10, two cache memories), a disadvantage arises in that, where the timings completely coincide with each other, the buffer invalidation request commands are sent out on the system bus from both the cache memories and thus the write data in both the cache memories are lost or disappear.

To remove the disadvantage, such a countermeasure can be proposed that the rewrite into the common region is permitted for only one CPU (copy-on-write system). This, however, extremely complicates the cache memory control and thus is not practical.

Figures 12a and 12b show the principle of the buffer invalidation control according to one aspect of the present invention.

As shown in Figs. 12a and 12b, the present buffer invalidation control is applied to a multiprocessor system in which a plurality of copy-back cache memories M1 to Mn and at least one common memory CM are connected via a system bus. Each cache memory Mi includes: a memory unit including a data region D, an address region A, a validation indication flag V for indicating whether a region indicated by an access address exists in the self cache memory, and a modified status indication flag M for indicating whether data is rewritten; a register unit P0 for storing an address and data based on a write request from a corresponding CPU Ci; a unit P11, operatively connected to the memory unit and the register unit, for storing a write data by the write request from the corresponding CPU in an object entry and the register unit to turn ON the modified status indication flag and sending out to the system bus a buffer invalidation request command including a part of the write address when the object region is registered in the self cache memory and the modified status indication flag is OFF in the case of an occurrence of the write request from the corresponding CPU; a unit P12, operatively connected to the memory unit, for monitoring a command on the system bus and comparing an address included in the command with the write address; and a unit P13, operatively connected to the memory unit, the register unit and the comparing unit, for canceling the buffer invalidation request command in waiting and storing a content of the register unit in the common memory in a write-through manner when the command on the system bus indicates a buffer invalidation request command from another cache memory and an address included therein indicates an identical region of the buffer invalidation request command in waiting.

For simplification of the explanation, it is assumed that the respective write requests are given simultaneously to the corresponding regions in two cache memories ($M_1$ and $M_2$), and one cache memory ($M_1$) carries out a quicker data write than the other cache memory ($M_2$).

In this case, the buffer invalidation request command from the cache memory $M_1$ is sent out on the system bus, and thus the cache memory $M_2$ cancels the buffer invalidation request command in the retention status (waiting status to send) and stores the data stored in the register unit P0, in the common memory CM (Prevention of the write data from disappearance).

On the other hand, when the issuance of the buffer invalidation request command from the self memory (cache memory $M_1$) is completed, the cache memory $M_1$ can accept the write request from the corresponding CPU and return the response indicating the end of the write request. Also, since the buffer invalidation request command from the cache memory $M_2$ has been canceled, the data in the object region is prevented from being lost in the cache memory $M_1$.

As explained above, when the buffer invalidation request command can be issued in the event that the respective write requests into the internal corresponding regions are generated simultaneously in a plurality of cache memories, each of the cache memories can renew the internal entry concerned and return the response of the write end to the corresponding CPU after the completion of the self write-once operation, and on the other hand, when the buffer invalidation request command is received, each cache memory can reflect the content of the register unit P0 on the common memory CM in the write-through manner. Accordingly, it is possible to invalidate the corresponding region in the other cache memory without losing the rewritten data and thus utilize the high speed property which is the merit of a copy-back cache memory, to the maximum extent, to thereby contribute to the improvement in the efficiency of the entire system.

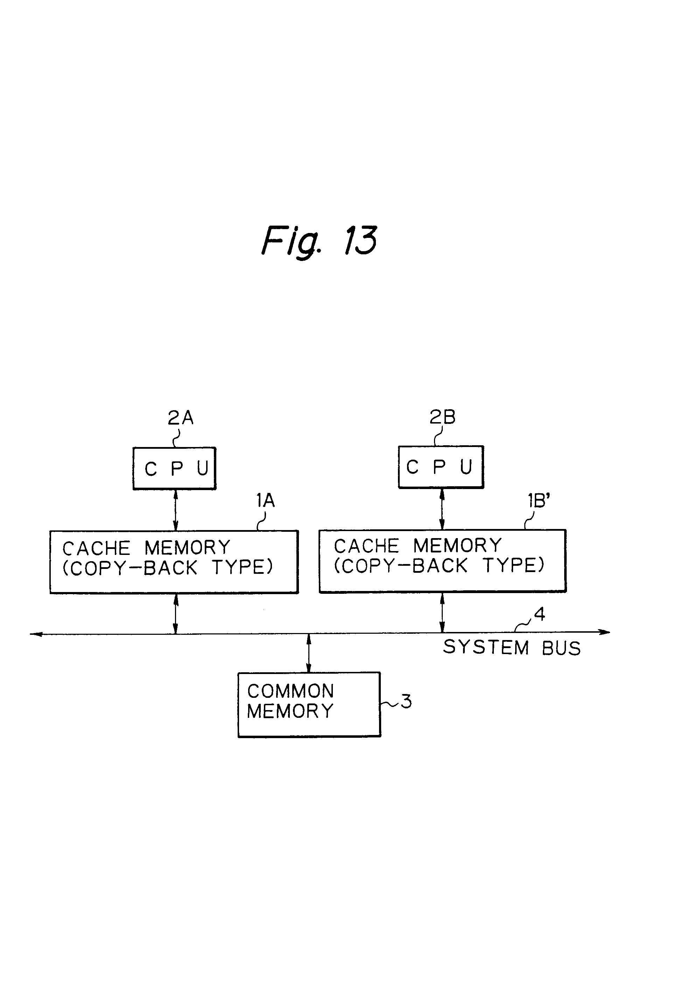

Figure 13 illustrates a constitution of a closely coupled multiprocessor system to which the buffer invalidation control according to this invention is applied.

In this system, a plurality of copy-back cache memories (only two cache memories 1A and 1B' are shown for simplification of the illustration) are connected via a system bus 4 to at least one common memory 3 (only one is shown for simplification of the illustration). Also, central processing units (CPUs) 2A and 2B for controlling the supply of address information to the corresponding cache memories and the data read/write are connected to the respective cache memories 1A and 1B.

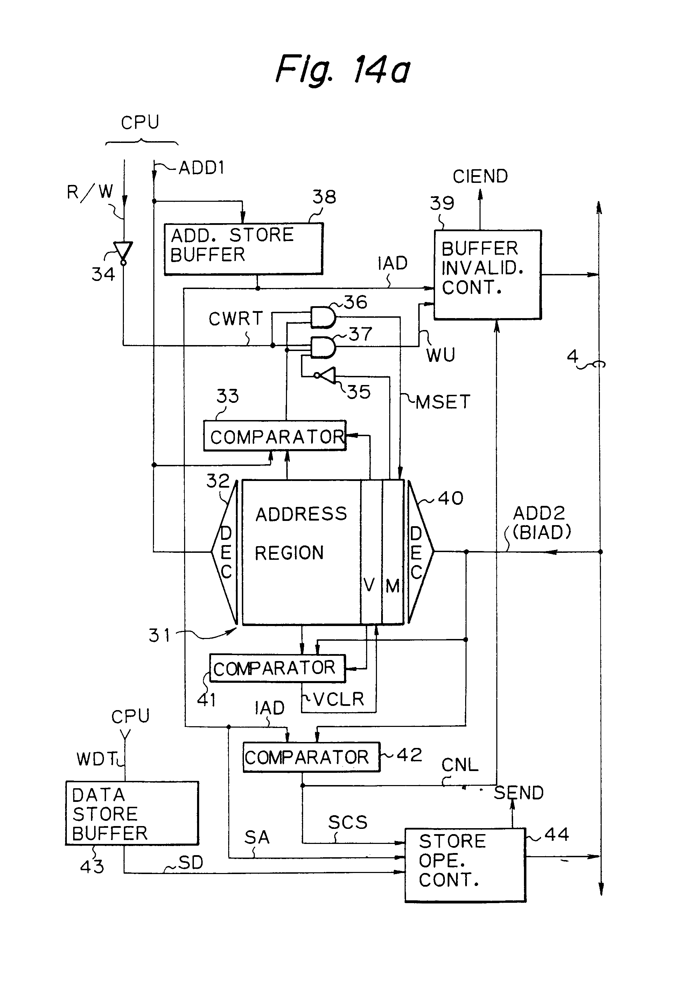

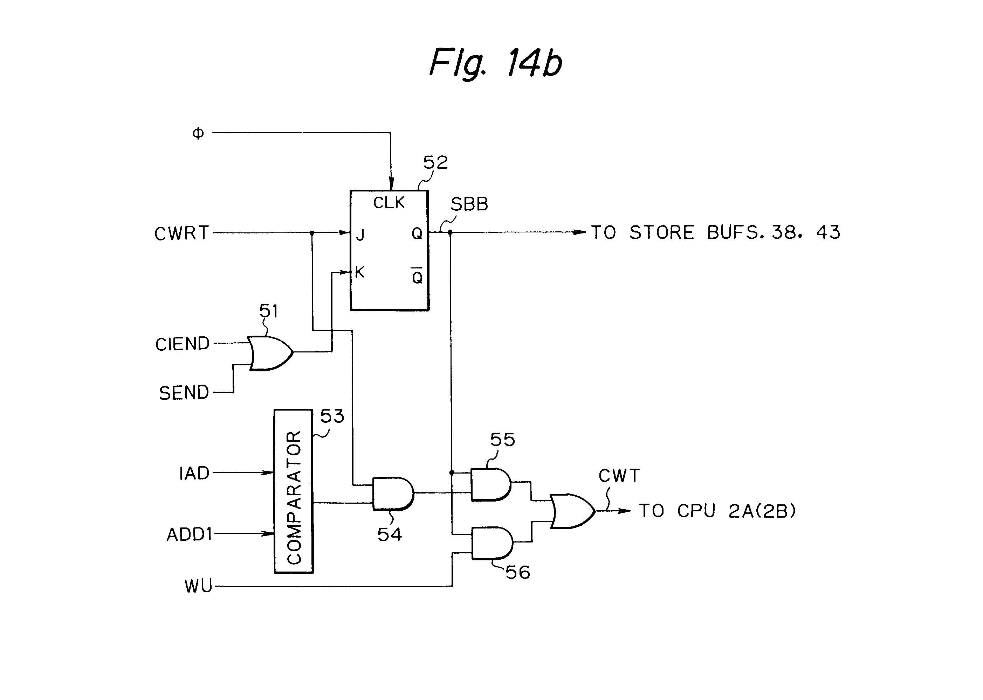

Figures 14a and 14b illustrate an internal constitution of the cache memory 1A, 1B' shown in Fig. 13.

In Fig. 14a, reference 31 denotes a tag area (tag memory) which has an address area for memorizing the physical address of access data, a validation indication flag "V" for indicating whether a region indicated by an access address exists in the self cache memory or not, and a modified status indication flag "M" for indicating whether data is rewritten or not. Note, the respective flags "V" and "M" represent "ON" or "1" when the respective conditions have been affirmed, and represent "OFF" or "0" when the conditions have been denied.

Reference 32 denotes a decoder (DEC) for decoding an address ADD1 from the corresponding CPU; reference 33 a comparator responding to the address registered in the tag area 31, the address ADD1 from the CPU and the bit of the flag "V"; reference 34 an invertor responding to the read/write control signals "R/W" from the CPU; reference 35 an invertor responding to the bit of flag "M"; reference 36 an AND gate for making the bit of flag "M" to be set status (signal "MSET") in response to the output of the comparator 33 and the output (CPU write signal "CWRT") of the invertor 34; reference 37 an AND gate responding to the output of the comparator 33, the output "CWRT" of the invertor 34 and the output of the invertor 35; reference 38 a store buffer for storing the address ADD1 from the corresponding CPU; and reference 39 a buffer invalidation controller having the functions of responding to the invalidation address "IAD" being supplied from the store buffer 38, the output WU and cancel signal CNL (to be described later) of AND gate, and also of outputting the signal "CIEND" for designating the preparation of the buffer invalidation request command of its send-out to the system bus 4, the send-out cancellation of the command and the issuance end of the command.

Reference 40 denotes a decoder (DEC) for decoding an address ADD2 on the system bus 4; reference 41 a comparator responding to the address registered in the tag area 31, the address "ADD2" on the system bus 4 and the bit of flag "V"; reference 42 a comparator responding to the invalidation address "IAD" (30 bits) being supplied from the store buffer 38 and the address "ADD2" (in this case, the address "BIAD" of buffer invalidation request command from the other cache memory) on the system bus 4; reference 43 a store buffer for storing the write data "WDT" from the corresponding CPU; and reference 44 a store operation controller having the functions of responding to the store address "SA" (32 bits) being supplied from the store buffer 38, the store data "SD" being supplied from the store buffer 43 and the store command starting signal "SCS" (to be described later) being output from the comparator 42, and of outputting the signal "SEND" for designa-ting the preparation of store command, the send-out to the system bus 4 and the end of the store operation.

Note, when the address of tag area 31 coincides with the CPU address "ADD1" with the validation indication flag "V" being ON status (V = 1), the comparator 33 sets its output to "1", thereby makes the corresponding AND gate 36 to be "valid". If the modified status indication flag "M" is OFF (M = 0) in this status (the output of the comparator 33 being "1"), the output of the invertor 35 becomes "1" and the AND gate 37 becomes "valid". On the other hand, the comparator 41 clears (signal VCLR) the bit of flag "V" when the address of the tag area 31 coincides with the address "ADD2" on the system bus 4 with the validation indication flag "V" being ON (V = 1) status. Also, when the address "BIAD" of the buffer invalidation request command from the other cache memory on the system bus 4 coincides with the invalidation address "IAD" from the store buffer 38, the comparator 42 supplies the cancel signal "CNL" to the buffer invalidation controller 39 and supplies the store command starting signal "SCS" to the store operation controller 44.

The circuit shown in Fig. 14b is constituted by an OR gate 51 which responds to the issuance/end indication signal "CIEND" of the buffer invalidation request command and the store operation end indication signal "SEND"; a J-K type flip-flop 52 for outputting the store buffer busy signal "SBB" to the Q-output terminal upon receipt of the CPU write signal "CWRT", the output of OR gate 51 and the external clock respectively to the J-terminal, K-terminal and clock-terminal "CLK"; a comparator 53 for detecting a coincidence or incoincidence between the invalidation address "IAD" from the store buffer 38 and the address "ADD1" from the CPU; an AND gate 54 for responding to the output of the comparator and the CPU write signal "CWRT"; an AND gate 55 for responding to the output of the AND gate and the store buffer busy signal "SBB"; and an AND gate 56 for responding to the output "WU" of the AND gate 37 (see Fig. 14a) and the store buffer busy signal "SBB" and an OR gate 56 for generating the CPU weight signal "CWT" in response to the output of the AND gates 55 and 56.

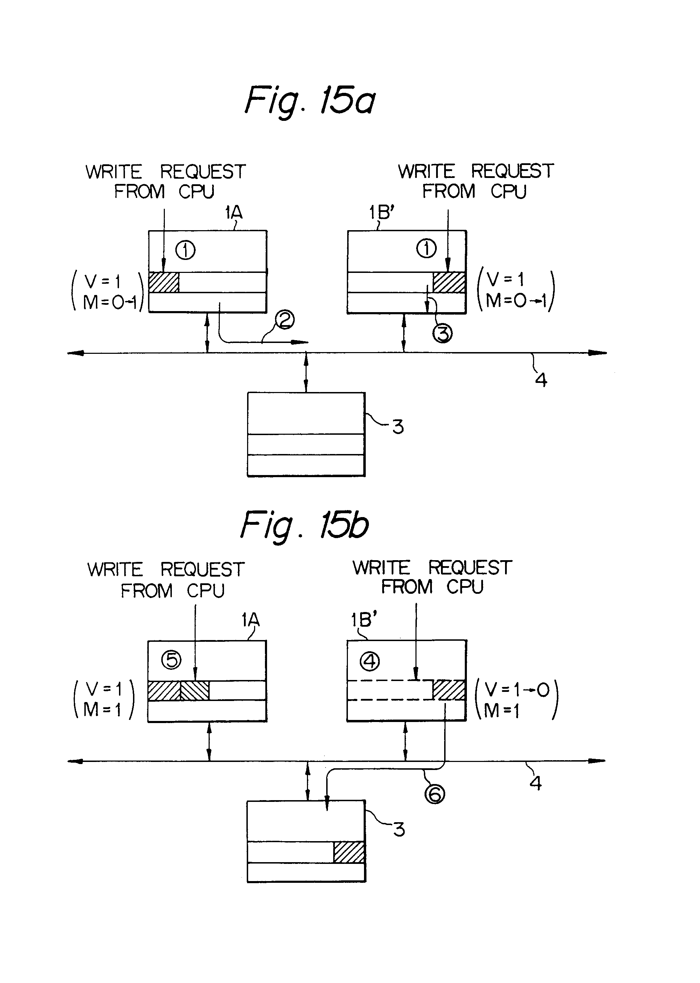

Next, the manner of the buffer invalidation control is explained with reference to Figs. 15a and 15b.

(See Fig. 15a)

① Where the respective write request from the corresponding CPU 2A, 2B is given to a region which is registered in

the self memory (V = 1) and in which the modified status indication flag is OFF (M = 0), each cache memory 1A, 1B' retains the data and address by the write request in the object entry and the store buffers 43 and 38, and returns the write end response to the corresponding CPU. At this time, since the rewrite object entry is shifted from the unmodified status to the modified status, each cache memory 1A, 1B' turns ON the modified status indication flag "M" (M = 1).

②    The cache memory 1A sends out the buffer invalidation request command to the system bus 4 (write-once operation).

③    In the same manner as in the cache memory 1A, the cache memory 1B' is going to send out (issue) the buffer invalidation request command, but cannot acquire the usage right of the system bus because the cache memory 1A has a quicker operation by chance. As a result, the cache memory 1B' is brought to a send-out (issue) wait status of the buffer invalidation request command.

(See Fig. 15b)

④    The cache memory 1B' responds to the buffer invalidation request command from the cache memory 1A and deletes the registration of the corresponding region.

Note, in the issue wait status of the buffer invalidation request command, the cache memory 1B' does not terminate a new write request from the CPU 2B to the corresponding region.

⑤    Since the issuance of the buffer invalidation request command from the self memory has been completed, the cache memory 1A accepts the write request from the corresponding CPU 2A and returns the response indicating the end of the write request.

⑥    Since the buffer invalidation request command has been issued from the cache memory 1A to the same region as the buffer invalidation request command which had been in the issue wait status, the cache memory 1B' cancels the issue wait status and stores the content of the store buffer held at the step ① in the common memory 3 (V = 1 → 0) in the write-through manner by use of the write command. As a result, it is possible to prevent a disappearance of the write data or written data.

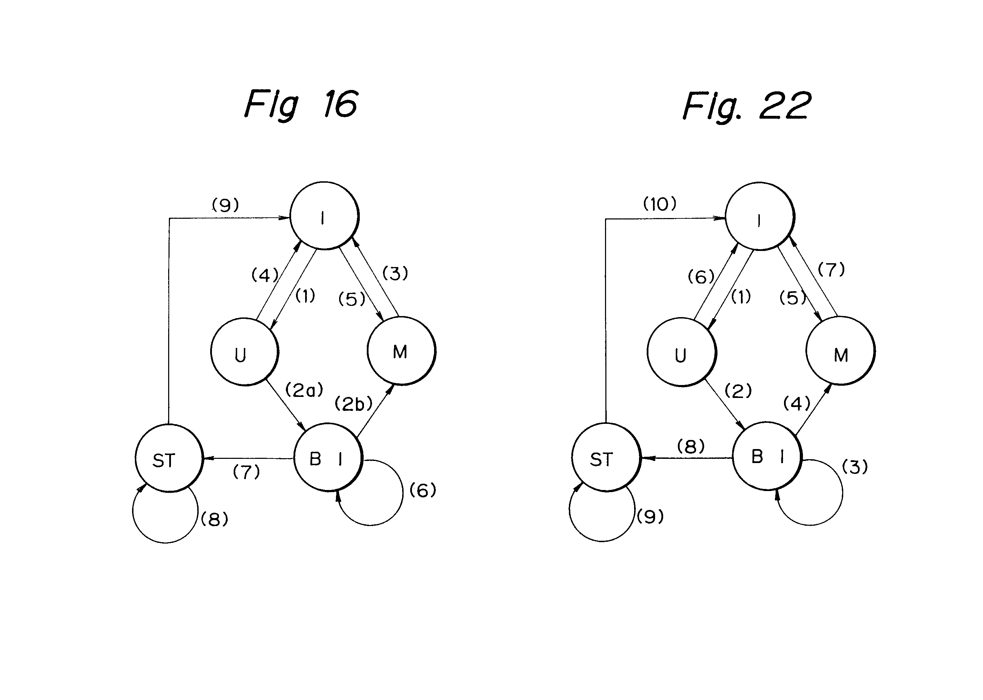

Figure 16 shows the manner of a status transition of the cache memory 1A, 1B' shown in Fig. 13.

In the illustration, the references "I", "U", "M", (1), (3), (4) and (5) are the same as those used in Fig. 11 and thus the explanation is omitted. Reference "ST" denotes a waiting status for storing to the common memory, and reference "BI" denotes a waiting status for sending out the buffer invalidation request command. Also, reference (2a) stands for a write into the unmodified region; reference (2b) an issuance of the buffer invalidation request command; reference (6) a waiting status for sending out the buffer invalidation request command; reference (7) a detection of the buffer invalidation request command to the corresponding region; reference (8) a waiting status for storing; and reference (9) a store completion.

As described above, according to the buffer invalidation control of this embodiment, where the write requests into the internal corresponding regions are generated simultaneously in the cache memories 1A and 1B, one cache memory 1A (1B') can issue the buffer invalidation request command, rewrite the entry concerned after the end of the write-once operation and return the write end response to the CPU. On the other hand, the other cache memory 1B' (1A) cancels the send-out wait status of the buffer invalidation request command in the self memory, receives the buffer invalidation request command from the one cache memory 1A (1B'), and writes the contents of the store buffers 38 and 43 into the common memory 3 in the write-through manner.

Therefore, it is possible to invalidate the corresponding region in the other cache memory without losing the rewritten data and thus utilize the high speed property which is the merit of a copy-back cache memory, to thereby contribute to the improvement in the efficiency of the entire system.

Although, in the above embodiment, the manner of the buffer invalidation control between two cache memories is explained, it is apparent to those skilled in the art that the manner of the above control is applicable to that between three or more copy-back cache memories.

(Third Embodiment)

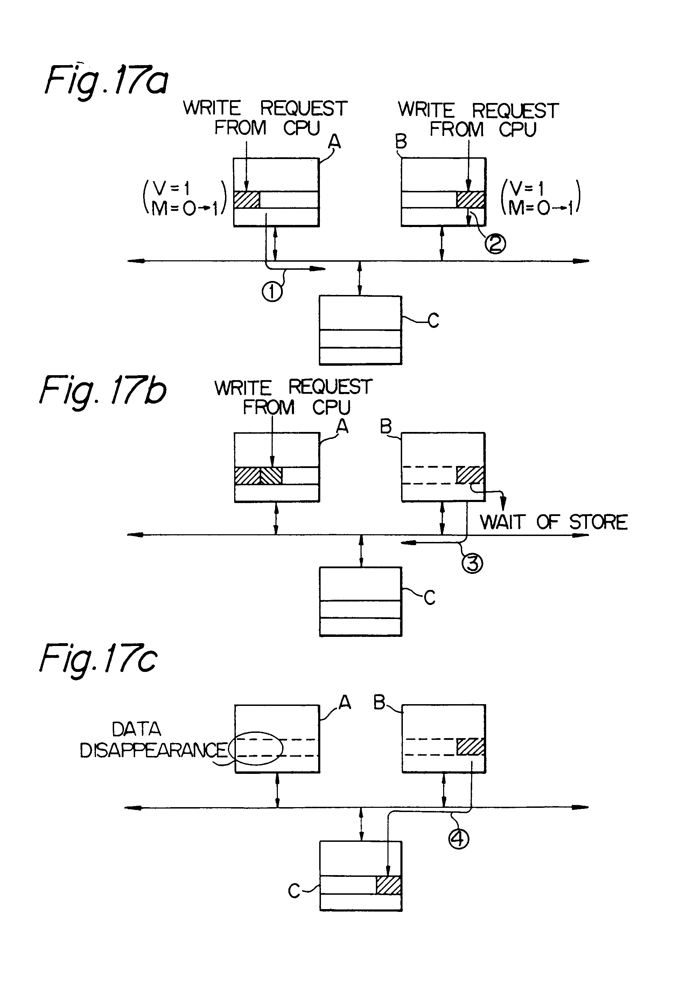

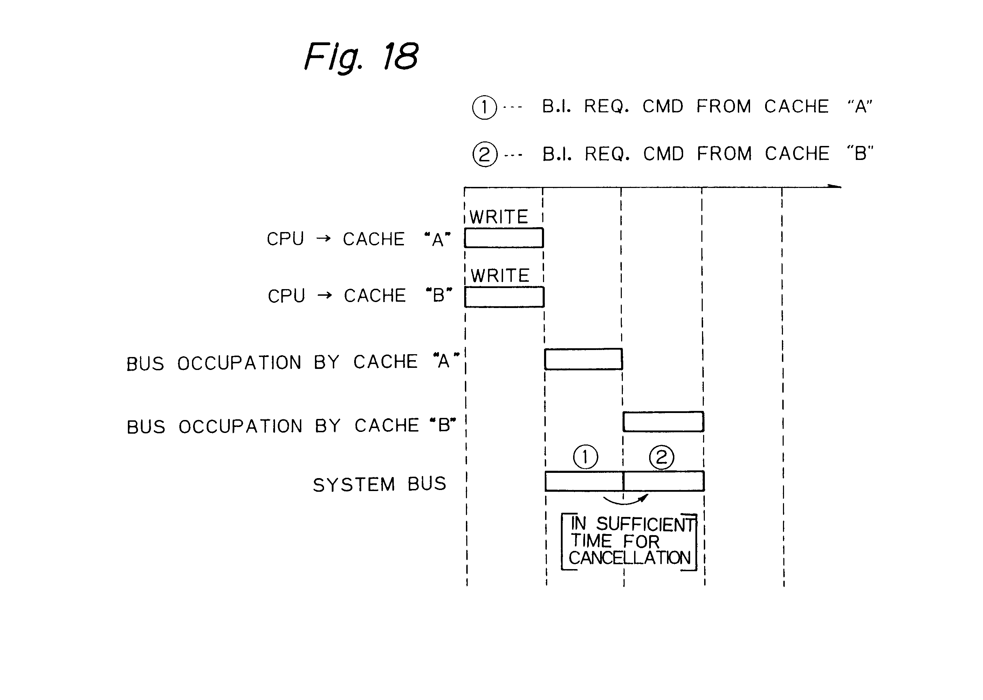

For a better understanding of the third preferred embodiment of the present invention, the problems in the prior art will be explained with reference to Figs. 17a to 17c and Fig. 18.

Figures 17a to 17c show an example of a conventional cache memory control.

In the illustration, it is assumed that both the cache memories "A" and "B" are copy-back ones. Note, reference "V" stands for a validation indication flag which indicates whether a region designated by an access address exists in the self cache memory or not, and reference "M" stands for a modified status indication flag which indicates whether data is rewritten or not.

(See Fig. 17a)

Where a data write request is given to the cache memories "A" and "B", respectively, from the corresponding CPUs, each cache memory "A", "B" writes the write data in an object region (entry) and turns ON the respective modified status indication flag "M" (M = 1) when the object region has been registered in the self memory (V = 1) and the modified status indication flag "M" has been OFF (M = 0).

In the illustration, when the data is written in an unmodified status region, the cache memory "A" sends out a buffer invalidation request command to the system bus (⇒ ① ).

Although the cache memory "B" is also going to send out a buffer invalidation request command, it cannot occupy the system bus because the cache memory "A" has a quicker operation by chance. As a result, the cache memory "B" is brought to a "waiting status for sending out the buffer invalidation request command (⇒ ② ).

(See Fig. 17b)

The cache memory "B" is brought to a "store" wait status by the buffer invalidation request command from the cache memory "A". The "store" wait status stands for a status for storing the data in the corresponding region into the common memory "C". On the other hand, since the cache memory "A" has finished sending out the buffer invalidation request command, it receives a write request from its corresponding CPU and returns a response indicating the write end to the CPU.

Since the buffer invalidation request command from the cache memory "A" has been sent out to the same region as the buffer invalidation request command which is in the send-out wait status, the cache memory "B" is going to cancel the send-out wait status, but cannot execute the cancellation as shown in the timing chart of Fig. 18.

As a result, the buffer invalidation request command which has been in the send-out wait status in the cache memory "B" is sent out to the system bus (⇒ ③ ).

(See Fig. 17c)

The cache memory "B" stores the data which has been in the store wait status, in the common memory "C" (⇒ ④ ).

On the other hand, the corresponding region of the cache memory "A" is cleared by the buffer invalidation request command which has been sent out from the cache memory "B", and therefore the data disappears.

In the above conventional control system, a disadvantage occurs in that, where the write requests are generated simultaneously to the respective corresponding regions of a plurality of copy-back cache memories (in the example of Figs. 17a to 17c, two cache memories "A" and "B"), the buffer invalidation request commands are sent out on the system bus from both the parties. Namely, as shown in the timing chart of Fig. 18, immediately after the buffer invalidation request command from the other cache memory is detected, the cancellation of the send-out of the buffer invalidation request command from the self cache memory is not in time. As a result, a problem arises in that the buffer invalidation request commands are sent out from both the cache memories and thus both the write data are lost or disappear.

To avoid this disadvantage, such a countermeasure can be proposed that the rewrite into the common region is permitted for only one CPU (copy-on-write system). This, however, complicates the cache control and thus is not practical.

Also, as another countermeasure, the system for writing the data in the object region simultaneously into the common memory "C" at the stage of ① Item (1) can be proposed. This system, however, fails to utilize the merit of a copy-back cache memory (decrease in the frequencies of bus access and the high speed processing caused thereby) to the maximum extent, and therefore a problem arises in that the performance of the entire system is lowered.

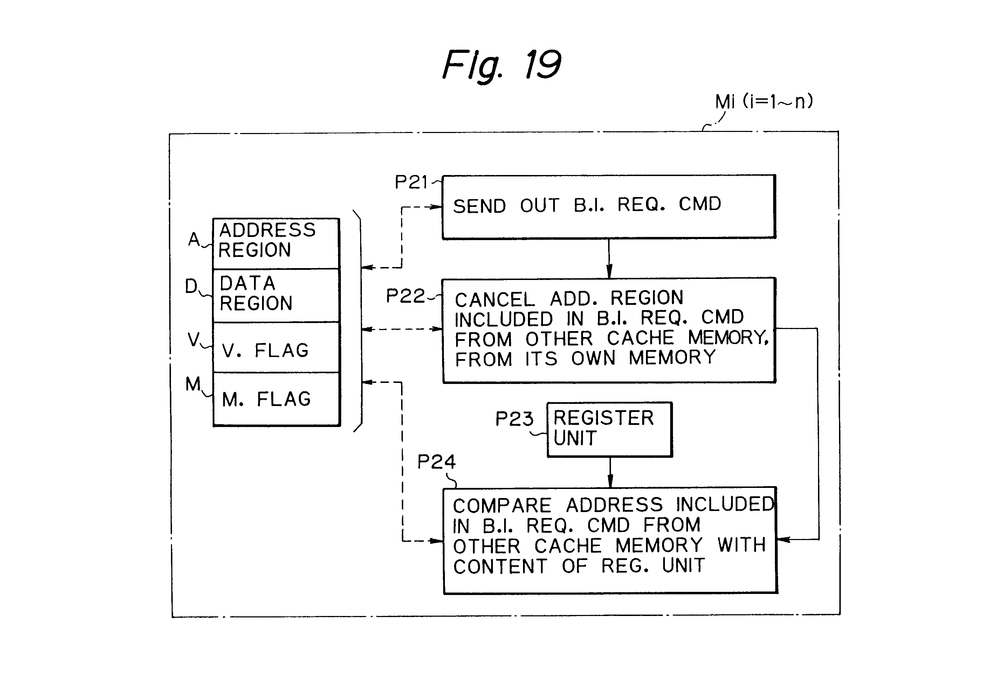

Figure 19 shows the principle of the buffer invalidation control according to another aspect of the present invention.

As shown in Fig. 19, the present buffer invalidation control is applied to a multiprocessor system in which a plurality of copy-back cache memories M1 to Mn and at least one common memory CM are connected via a system bus. Each cache memory Mi includes: a memory unit including a data region D, an address region A, a validation indication flag V for indicating whether a region indicated by an access address exists in the self cache memory, and a modified status indication flag M for indicating whether data is rewritten; a unit P21, operatively connected to the memory unit, for sending out to the system bus a buffer invalidation request command including a part of a write address from a corresponding CPU when the object region is registered in the self cache memory and the modified status indication flag is OFF in the case of an occurrence of the write request from the corresponding CPU; a unit P22, operatively connected to the memory unit and the sending unit, for monitoring a command on the system bus and, where the command is a buffer invalidation request command from another cache memory, canceling an address region included in the command out of the self cache memory; a register unit P23 for retaining an address of the buffer invalidation request command sent out by the self cache memory; and a unit P24, operatively connected to the memory unit and the register unit, for comparing an address included in the buffer invalidation request command from another cache memory with a content of the register unit, to thereby make a control so as to ignore the buffer invalidation request command from the other cache memory to an identical region where it is detected within a predetermined period after the buffer invalidation request command has been sent out from the self cache memory.

Each cache memory writes data into the unmodified region based on the write request from the corresponding CPU and then sends out the buffer invalidation request command to the system bus. In this case, where the buffer invalidation request command from the other cache memory to the identical region is detected within a constant period since the buffer invalidation request command has been sent out, the control is carried out such that the command concerned is ignored.

Namely, where the buffer invalidation request commands are issued in sequence to an identical region in a certain cache memory from a plurality of cache memories, the second and subsequent buffer invalidation request commands are ignored. Therefore, it is possible to realize the control of coincidence with the common memory without losing the data in the object region. Also, it is possible to utilize the merit of a copy-back cache memory to the maximum extent and thus contribute to an improvement of the performance of the entire system.

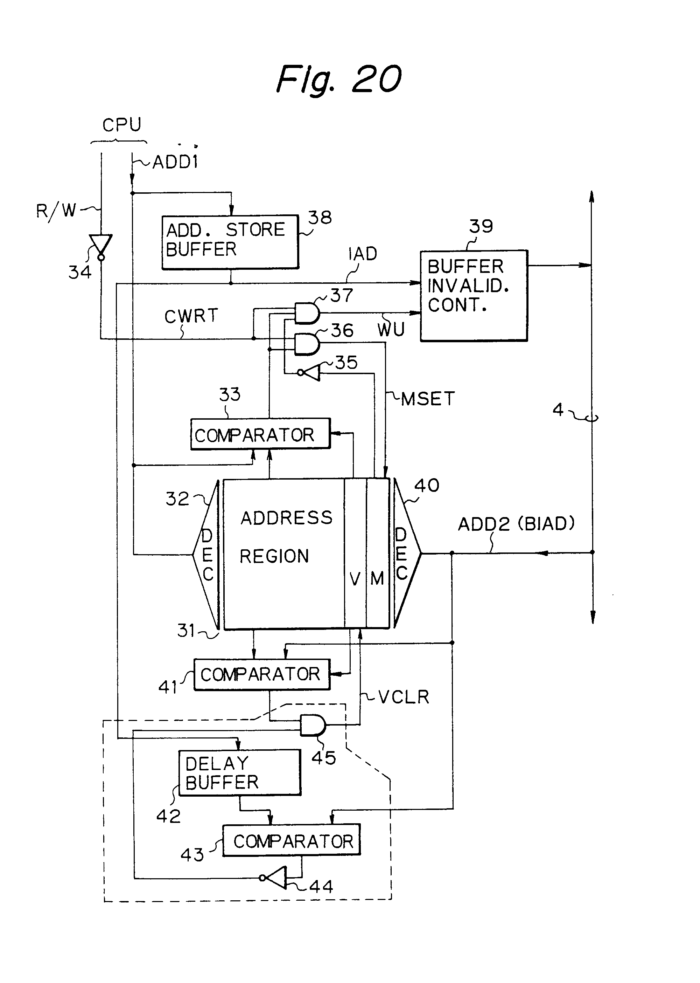

Figure 20 illustrates another internal constitution of the cache memory (1A, 1B') shown in Fig. 13. Note, the portion enclosed by a broken line is the portion characterizing the present invention.

In the illustration, reference 31 denotes a tag area (tag memory) which has an address area for memorizing the physical address of access data, a validation indication flag "V" for indicating whether a region indicated by an access address exists in the self cache memory or not, and a modified status indication flag "M" for indicating whether data is rewritten or not. Note, the respective flags "V" and "M" represent "ON" or "1" when the respective conditions have been affirmed, and represent "OFF" or "0" when the conditions have been denied.

Reference 32 denotes a decoder (DEC) for decoding an address "ADD1" from the corresponding CPU; reference 33 a comparator responding to the address registered into the tag area 31; the address "ADD1" from the CPU and the bit of flag "V"; reference 34 an invertor for responding to the read/write control signals "R/W" from the CPU; reference 35 an invertor for responding to the bit of flag "M"; reference 36 an AND gate for making the bit of flag "M" to be set status (signal "MSET") in response to the output of the comparator 33 and the output of invertor 34 (CPU write signal "CWRT"); reference 37 an AND gate for responding to the output of the comparator 33, the output "CWRT" of invertor 34 and the output of invertor 35; reference 38 a store buffer for storing the address "ADD1" from the corresponding CPU; and reference 39 a buffer invalidation controlling circuit, which have the functions of responding to the address (invalidation address ) "IAD" of buffer invalidation request command being supplied from the store buffer 38 and the output (invalidation command send request) "WU" of AND gate 37, preparing the buffer invalidation request command and sending it to the system bus 4.

Also, reference 40 denotes a decoder (DEC) for decoding the address "ADD2" on the system bus 4; reference 41 a comparator responding to the address registered into the tag area 31, the address "ADD2" on the system bus 4 and the bit of flag "V"; reference 42 a delay buffer for delaying by a given time the invalidation address "IAD" being supplied from the store buffer 38; reference 43 a comparator responding to the output address of the delay buffer and the address "ADD2" on the system bus 4 (the address "BIAD" of buffer invalidation request command from the other cache memory in this case); reference 44 an invertor responding to the output of the comparator 43; and reference 45 an AND gate for clearing (signal "VCLR") the bit of flag "V" in response to the output of the invertor and the output of the comparator 41.

Note, when the address of tag area 31 coincides with the CPU address "ADD1" with the validation indication flag "V" being ON (V = 1), the comparator 33 sets its output to "1" and thereby makes the corresponding AND gate to be "valid". If the modified status flag "M" should be OFF (M = 0) under this status (the output of the comparator 33 being "1"), the output of invertor 35 becomes "1" and the AND gate 37 becomes "valid". On the other hand, when the address "BIAD" of buffer invalidation request command from the other cache memory on the system bus 4 has coincided with the invalidation address "IAD" after the delay of given time, the comparison circiuit 43 sets its output to "1", thereby making the output of invertor 44 to be "O" and making the AND gate 45 to be "invalid". In other words, when both the addresses "IAD" and "BIAD" are in incoincidence, the AND gate 45 becomes "valid". When the address of tag area 31 has coincided with the address "ADD2" on the system bus 4 with the validation indication flag "B" being ON (V = 1), the comparator 41 under this situation (the output of the comparator being "0") sets its output to "1", thereby clearing the bits of flag "V" through the AND gate 45.

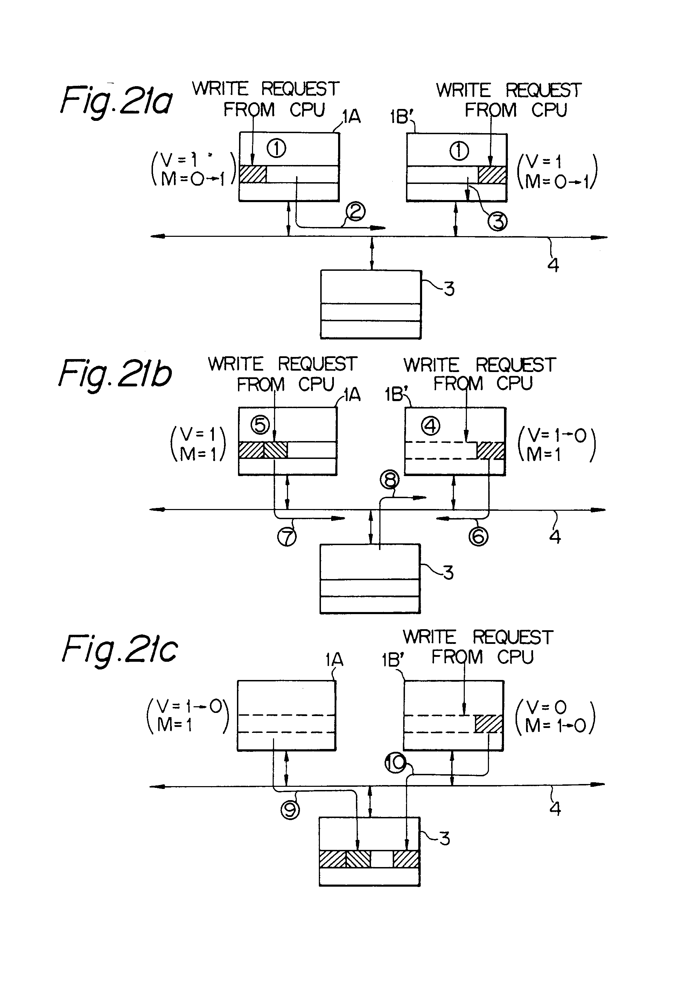

Next, the buffer invalidation control is explained with reference to Figs. 21a to 21c.

(See Fig. 21a)

①    Where the write request from the corresponding CPU 2A, 2B is given to a region which has been registered in the self memory (V = 1) and in which the modified status indication flag is OFF (M = 0), each cache memory 1A, 1B' retains the data and address by the write request in the object entry and the store buffer 38 (note, that for data is not shown in Fig. 20) and returns the write end response to the corresponding CPU. At this time, since the rewrite object entry is shifted from the unmodified status to the modified status, each cache memory 1A, 1B' turns ON the modified status indication flags "M" (M = 1).

②    The cache memory 1A sends out the buffer invalidation request command to the system bus 4 (write-once operation).

③    The cache memory 1B' is going to send out (issue) the buffer invalidation request command, but cannot acquire the usage right of the system bus because the cache memory 1A has a quicker operation by chance. As a result, the cache memory 1B' is brought to a send-out (issue) wait status of the buffer invalidation request command.

(See Fig. 21b)

④    The cache memory 1B' cancels the registration of the corresponding region by the buffer invalidation request command from the cache memory 1A (V = 1→ 0).

Note, in the issue wait status of the buffer invalidation request command, the cache memory 1B' does not terminate a new write request from the CPU 2B to the identical region.

⑤    Since the issuance of the buffer invalidation request command from the self memory has been ended, the cache memory 1A receives the write request from the corresponding CPU 2A and returns the write end response.

⑥    Since the buffer invalidation request command has been issued from the cache memory 1A to the same region as the buffer invalidation request command which has been in the issue wait status, the cache memory 1B' cancels the issue wait status and tries to reflect the content of the store buffer which has been retained in the step of ①, on the common memory 3 by use of the write command.

⑦    The cache memory 1A asserts the temporary intercept signal because the object region of the write command on the system bus 4 has already been modified within the cache memory 1A.

⑧    The common memory 3 answers the re-try request to the write command in Step ⑥.

(See Fig. 21c)

⑨    The cache memory 1A writes the entry which has been overlapped at Step ⑦, to the common memory 3 (V = 1→ 0). ⑩ The cache memory 1B' issues the write command of Step ⑦ whose rewrite has been requested at Step ⑧ - (M = 1→ 0).

Note, the write request from the CPU 2B to the cache memory 1B' becomes the usual write operation after the end of the series of operations ( ① ~⑩ ). Namely, only one entry is taken into the cache memory concerned from the common memory 3, and its content alone is modified.

Figure 22 shows the manner of another status transition of the cache memory 1A, 1B' shown in Fig. 13.

In the illustration, reference "I" denotes an invalid status (V = 0); reference "U" a valid and unmodified status (V = 1 and M = 0); reference "M" a valid and modified status (V = 1 and M = 1); reference BI a waiting status for sending out the buffer invalidation request command; reference ST a waiting status for storing into the common memory; reference (1) a new registration by the read operation; reference (2) a write into the unmodified region; reference (3) a waiting status for sending out the buffer invalidation request command; reference (4) an issue of the buffer invalidation request command; reference (5) a new registration by the write operation; reference (6) a clear for replacement; reference (7) a copy-back for replacement; reference (8) a detection of the buffer invalidation request command to the identical region; reference (9) a waiting status for storing; and reference (10) a store completion. Note, the shift (6) to the status "I" from the status "U" and the shift (7) to the status "I" from the status "M" are executed by the clear operation based on the buffer invalidation request command from the other cache memory.

According to the cache memory control of this embodiment, in the case of the simultaneous generation of the write requests to the corresponding regions within the cache memories 1A and 1B', each cache memory 1A (1B') functions, after sending out the buffer invalidation request command to the system bus, to ignore the command concerned once the buffer invalidation request command from the other cache memory 1B' (1A) to the corresponding region has been detected within a predetermined period. Namely, generally speaking, where the buffer invalidation request commands are issued in sequence to an identical region in a certain cache memory from a plurality of cache memories, the second and subsequent buffer invalidation request commands are controlled to be ignored.

Therefore, it is possible to invalidate the corresponding region in the other cache memory without losing the written data and thus realize the control of coincidence with the common memory. Also, it is possible to utilize the merit of a copy-back cache memory and thus contribute to an improvement of the performance of the entire system.

Although the present invention has been disclosed and described by way of three embodiments, it is apparent to those skilled in the art that other embodiments and modifications of the present invention are possible without departing from the spirit or essential features thereof.

**Claims**

1.   A multiprocessor system in which a plurality of cache memories (M1 to Mn) and at least one common memory (CM) are connected via a system bus, at least one ($M_1$) of the plurality of cache memories being a copy-back cache memory, the copy-back cache memory comprising:
        a memory means including a data region (D), an address region (A), a validation indication flag (V) for indicating whether a region indicated by an access address exists in the self cache memory, a modified status indication flag (M) for indicating whether data is rewritten, and a shared status indication flag

(S) for indicating whether an identical data is shared with other cache memories;
        a first means (P1), operatively connected to the memory means, for intercepting a response of the common memory to an access when it detects the access from another cache memory to a region which is owned by the self cache memory and has already been rewritten and has not yet been reflected on the common memory;
        a second means (P2), operatively connected to the memory means and the first means, for transferring to the other cache memory an entry corresponding to a region indicated by the access address from the other cache memory and turning ON the shared status indication flag; and
        a third means (P3), operatively connected to the memory means and the second means, for sending out a write address to the system bus and turning OFF the shared status indication flag where a write into a shared and modified entry is carried out, to thereby invalidate a corresponding entry in the other cache memory based on the write address.

2.   A multiprocessor system in which a plurality of copy-back cache memories (M1 to Mn) and at least one common memory (CM) are connected via a system bus, each cache memory (Mi) comprising:
        a memory means including a data region (D), an address region (A), a validation indication flag (V) for indicating whether a region indicated by an access address exists in the self cache memory, and a modified status indication flag (M) for indicating whether data is rewritten;
        a register means (P0) for storing an address and data based on a write request from a corresponding CPU (Ci);
        means (P11), operatively connected to the memory means and the register means, for storing a write data by the write request from the corresponding CPU in an object entry and the register means to turn ON the modified status indication flag and sending out to the system bus a buffer invalidation request command including a part of the write address when the object region is registered in the self cache memory and the modified status indication flag is OFF in the case of an occurrence of the write request from the corresponding CPU;
        means (P12), operatively connected to the memory means, for monitoring a command on the system bus and comparing an address included in the command with the write address; and

means (P13), operatively connected to the memory means, the register means and the comparing means, for cancelling a waiting status of sending out the buffer invalidation request command and storing a content of the register means in the common memory in a write-through manner when the command on the system bus indicates a buffer invalidation request command from another cache memory and an address included therein indicates an identical region of the buffer invalidation request command in waiting to send out.

3. A multiprocessor system as set forth in claim 2, wherein each cache memory brings the register means to a released status when the send-out of the buffer invalidation command is completed.

4. A multiprocessor system as set forth in claim 2, wherein each cache memory monitors a buffer invalidation request command from another cache memory on the system bus and cancels an address region included in the command out of the self cache memory.

5. A multiprocessor system as set forth in claim 2, wherein each cache memory returns an end response to the write request from the corresponding CPU before it sends out the buffer invalidation request command.

6. A multiprocessor system as set forth in claim 3, wherein each cache memory comprises means for comparing an address by a new write request from the corresponding CPU with a part of the address in the register means, whereby each cache memory does not return an end response to a new write request to a region which is the object of the buffer invalidation until the register means is brought to the released status.

7. A multiprocessor system as set forth in claim 3, wherein each cache memory does not return an end response to a new write request from the corresponding CPU to a region where the validation indication flag is ON and the modified status indication flag is OFF, until the register means is brought to the released status.

8. A multiprocessor system in which a plurality of copy-back cache memories (M1 to Mn) and at least one common memory (CM) are connected via a system bus, each cache memory (Mi) comprising:

a memory means including a data region

(D), an address region (A), a validation indication flag (V) for indicating whether a region indicated by an access address exists in the self cache memory, and a modified status indication flag (M) for indicating whether data is rewritten;

means (P21), operatively connected to the memory means, for sending out to the system bus a buffer invalidation request command including a part of a write address from a corresponding CPU when the object region is registered in the self cache memory and the modified status indication flag is OFF in the case of an occurrence of the write request from the corresponding CPU;

means (P22), operatively connected to the memory means and the sending means, for monitoring a command on the system bus and, where the command is a buffer invalidation request command from another cache memory, cancelling an address region included in the command out of the self cache memory;

a register means (P23) for retaining an address of the buffer invalidation request command sent out by the self cache memory; and

means (P24), operatively connected to the memory means and the register means, for comparing an address included in the buffer invalidation request command from another cache memory with a content of the register means, to thereby make a control so as to ignore the buffer invalidation request command from the other cache memory to an identical region where it is detected within a predetermined period after the buffer invalidation request command has been sent out from the self cache memory.

9. A multiprocessor system as set forth in claim 8, further comprising means for delaying the address of the buffer invalidation request command retained in the register means by a predetermined time, wherein the delayed address is compared with the address included in the buffer invalidation request command from another cache memory.

10. A data processor including a plurality of cache memories, each of the cache memories comprising:

a flag means for retaining information indicating that a copy data by a cache-to-cache data transfer is owned by another cache memory; and

means, operatively connected to the flag means, for outputting a signal indicating an invalidation of the corresponding copy data in the another cache memory when a writing into

the another cache memory is requested after the cache-to-cache data transfer.

11. A method of controlling a plurality of cache memories to maintain a coherency of data therebetween, the cache memories being connected via a system bus to a common memory and including a first cache memory of copy-back type and a second cache memory, the first cache memory having a validation indication flag for indicating whether a region indicated by an access address exists in the self cache memory, a modified status indication flag for indicating whether data is rewritten, and a shared status indication flag for indicating whether an identical data is shared with other cache memories, the method comprising the steps of:

in the second cache memory, requesting the common memory to read out data;

in the first cache memory, retaining an object region of access by the second cache memory and detecting that the validation indication flag and the modified status indication flag are ON and the shared status indication flag is OFF, thereby intercepting a response of the common memory to the second cache memory;

in the first cache memory, transferring to the second cache memory an entry corresponding to the region which is the object of the access and, at the same time, turning ON the shared status indication flag;

in the first cache memory, making a new write into the entry concerned based on a write instruction from a corresponding controller and sending out the write address to the system bus;

in the second cache memory, detecting the write address to thereby invalidate the entry concerned based on a write instruction from a corresponding controller; and

in the first cache memory, turning OFF the shared status indication flag.

12. A method of controlling a plurality of cache memories to maintain a coherency of data therebetween, the cache memories being connected via a system bus to a common memory and including a first cache memory of copy-back type and a second cache memory of copy-back type, each copy-back cache memory having a validation indication flag for indicating whether a region indicated by an access address exists in the self cache memory, and a modified status indication flag for indicating whether data is rewritten, the method comprising the steps of:

in each of the first and second cache memories, retaining data and address based on a write request from a corresponding controller and returning a write end response to the corresponding controller where the write request is given to a region where the validation indication flag is ON and the modified status indication flag is OFF, and then turning ON the modified status indication;

in the first cache memory, sending out a buffer invalidation request command to the system bus;

bringing the second cache memory to a waiting status to send out a buffer invalidation request command therefrom;

in the second cache memory, responding to the buffer invalidation request command from the first cache memory to thereby cancel the registration of the corresponding region and turn OFF the validation indication flag;

in the first cache memory, accepting another write request from the corresponding controller and returning a write end response to the corresponding controller; and

in the second cache memory, cancelling the send-out wait status and storing the retained data in the common memory.

13. A method of controlling a plurality of cache memories to maintain a coherency of data therebetween, the cache memories being connected via a system bus to a common memory and including a first cache memory of copy-back type and a second cache memory of copy-back type, each copy-back cache memory having a validation indication flag for indicating whether a region indicated by an access address exists in the self cache memory, and a modified status indication flag for indicating whether data is rewritten, the method comprising the steps of:

in each of the first and second cache memories, retaining data and address based on a write request from a corresponding controller and returning a write end response to the corresponding controller where the write request is given to a region where the validation indication flag is ON and the modified status indication flag is OFF, and then turning ON the modified status indication;

in the first cache memory, sending out a buffer invalidation request command to the system bus;

bringing the second cache memory to a waiting status to send out a buffer invalidation request command therefrom;

in the second cache memory, responding to the buffer invalidation request command

from the first cache memory to thereby cancel the registration of the corresponding region and turn OFF the validation indication flag;

in the first cache memory, receiving another write request from the corresponding controller and returning a write end response to the corresponding controller;

in the second cache memory, cancelling the buffer invalidation request command and trying to reflect the retained data on the common memory by a write command;

in the first cache memory, asserting a temporary intercept signal from the second cache memory;

in the common memory, answering a retry request to the write command;

in the first cache memory, writing the entry which has already been overlapped, in the common memory, and turning OFF the validation indication flag; and

in the second cache memory, sending out the write command to thereby turn OFF the modified status indication flag.

Fig. 1a

Fig. 1b

Fig. 1c

Fig. 1d

Fig. 1e

Fig.2a

Fig.2b

Fig.2c

Fig.2d

Fig. 3a

Fig. 3b

EP 0 470 574 A2

# Fig. 4a

M1
CACHE MEMORY (COPY-BACK TYPE)

M2
CACHE MEMORY

Mn
CACHE MEMORY

SYSTEM BUS

CM
COMMON MEMORY

# Fig. 4b

M1

COPY-BACK CACHE MEMORY

D — DATA REGION

A — ADDRESS REGION

V — V. FLAG

M — M. FLAG

S — S. FLAG

P1 — FIRST UNIT

P2 — SECOND UNIT

P3 — THIRD UNIT

21

# Fig. 5

```
┌─────────┐                          ┌─────────┐
│  C P U  │~2B                       │  C P U  │~2A
└────┬────┘                          └────┬────┘
     ↕                                    ↕
┌──────────────────────┐1B        ┌──────────────────────┐1A
│ CACHE MEMORY         │          │ CACHE MEMORY         │
│ (WRITE-THROUGH TYPE) │          │ (COPY-BACK TYPE)     │
└──────────┬───────────┘          └──────────┬───────────┘
           ↕                                 ↕              4
◄──────────┼─────────────────────────────────┼─────────────►
           │                                            SYSTEM BUS
           ↕
      ┌─────────┐
      │ COMMON  │~3
      │ MEMORY  │
      └─────────┘
```

# Fig. 6

Fig. 7a

Fig. 7b

Fig. 7c

Fig. 7d

Fig. 7e

Fig. 8a

Fig. 8b

Fig. 8c

Fig. 8d

Fig. 8e

# Fig. 9

# Fig. 11

# Fig. 10

WRITE REQUEST
FROM CPU

WRITE REQUEST
FROM CPU

A

B

$\left( \begin{array}{l} V = 1 \\ M = 0 \rightarrow 1 \end{array} \right)$

$\left( \begin{array}{l} V = 1 \\ M = 0 \rightarrow 1 \end{array} \right)$

BICMD

SYSTEM BUS

COMMON
MEMORY

EP 0 470 574 A2

# Fig. 12a

EP 0 470 574 A2

$M_1$

CACHE MEMORY
(COPY−BACK TYPE)

$M_2$

CACHE MEMORY
(COPY−BACK TYPE)

$M_n$

CACHE MEMORY
(COPY−BACK TYPE)

SYSTEM BUS

COMMON
MEMORY — CM

# Fig. 12b

Mi (i=1~n)

REGISTER
PO — UNIT

P11

STORE DATA IN OBJECT
ENTRY AND REG. UNIT AND
SEND OUT BUFFER
INVALID. REQ. CMD

A — ADDRESS
REGION

D — DATA
REGION

V — V. FLAG

COMPARE ADDRESS OF
COMMAND ON BUS WITH
WRITE ADDRESS

P12

M — M. FLAG

CANCEL STATUS OF
SEND−OUT OF B.I.
REQ. CMD AND STORE
CONTENT OF REG. UNIT IN
P13 — COMMON MEMORY

EP 0 470 574 A2

# Fig. 13

# Fig. 14a

# Fig. 14b

EP 0 470 574 A2

# Fig. 15a

WRITE REQUEST
FROM CPU

WRITE REQUEST
FROM CPU

1A

1B'

①

①

$\left( \begin{array}{l} V = 1 \\ M = 0 \rightarrow 1 \end{array} \right)$

$\left( \begin{array}{l} V = 1 \\ M = 0 \rightarrow 1 \end{array} \right)$

②

③

4

3

# Fig. 15b

WRITE REQUEST
FROM CPU

WRITE REQUEST
FROM CPU

1A

1B'

⑤

④

$\left( \begin{array}{l} V = 1 \\ M = 1 \end{array} \right)$

$\left( \begin{array}{l} V = 1 \rightarrow 0 \\ M = 1 \end{array} \right)$

⑥

4

3

Fig. 22

Fig 16

*Fig.17a*

WRITE REQUEST FROM CPU

$\left(\begin{array}{c}V = 1 \\ M = 0 \to 1\end{array}\right)$

A

WRITE REQUEST FROM CPU

B

$\left(\begin{array}{c}V = 1 \\ M = 0 \to 1\end{array}\right)$

①

②

C

*Fig. 17b*

WRITE REQUEST FROM CPU

A

B

WAIT OF STORE

③

C

*Fig.17c*

A

B

DATA DISAPPEARANCE

④

C

# Fig. 18

① ⋯ B.I. REQ. CMD FROM CACHE "A"

② ⋯ B.I. REQ. CMD FROM CACHE "B"

CPU → CACHE "A"  | WRITE |

CPU → CACHE "B"  | WRITE |

BUS OCCUPATION BY CACHE "A"

BUS OCCUPATION BY CACHE "B"

SYSTEM BUS  ① ②

IN SUFFICIENT TIME FOR CANCELLATION

EP 0 470 574 A2

# Fig. 19

Mi (i=1~n)

A — ADDRESS REGION
D — DATA REGION
V — V. FLAG
M — M. FLAG

P21 — SEND OUT B.I. REQ. CMD

P22 — CANCEL ADD. REGION INCLUDED IN B.I. REQ. CMD FROM OTHER CACHE MEMORY, FROM ITS OWN MEMORY

P23 — REGISTER UNIT

P24 — COMPARE ADDRESS INCLUDED IN B.I. REQ. CMD FROM OTHER CACHE MEMORY WITH CONTENT OF REG. UNIT

EP 0 470 574 A2

# Fig. 20

Fig.21a

WRITE REQUEST FROM CPU

WRITE REQUEST FROM CPU

$\left(\begin{array}{l}V = 1 \\ M = 0 \to 1\end{array}\right)$

$\left(\begin{array}{l}V = 1 \\ M = 0 \to 1\end{array}\right)$

Fig.21b

WRITE REQUEST FROM CPU

WRITE REQUEST FROM CPU

$\left(\begin{array}{l}V = 1 \\ M = 1\end{array}\right)$

$\left(\begin{array}{l}V = 1 \to 0 \\ M = 1\end{array}\right)$

Fig.21c

WRITE REQUEST FROM CPU

$\left(\begin{array}{l}V = 1 \to 0 \\ M = 1\end{array}\right)$

$\left(\begin{array}{l}V = 0 \\ M = 1 \to 0\end{array}\right)$